# EUROPÄISCHE PATENTANMELDUNG

(11) **EP 4 814 033 A1**
(43) Veröffentlichungstag der Anmeldung: **30.09.2026**
(21) Anmeldenummer: 25166308.4
(22) Anmeldetag: 26.03.2025
(51) Int. Cl.: C08G 63/199, C08G 63/48, C08G 63/553, C08G 63/64, C08G 63/672, C08G 64/02, C08G 64/30

(54) **VERFAHREN ZUR HERSTELLUNG EINES AMORPHEN POLYESTERCARBONATS MITTELS DIREKTVERESTERUNG**

(71) Anmelder: Covestro Deutschland AG, 51373 Leverkusen (DE)
(72) Erfinder: BUIJSEN, Paul, 8043 AA Zwolle (NL); BERTIN, Annabelle, 2020 Antwerpen (BE); MEYER, Alexander, 40489 Düsseldorf (DE)
(74) Vertreter: Levpat

(57) **Zusammenfassung**

Die vorliegende Erfindung betrifft ein ökologisch und ökonomisch vorteilhaftes Verfahren zur Herstellung eines amorphen Polyestercarbonats umfassend Strukturen, abgeleitet von einem 1,4:3,6-Dianhydrohexitol und / oder Tricyclodecandimethanol, ein Polyestercarbonat, ebenfalls umfassend die genannten Strukturen, eine Formmasse, umfassend ein Polyestercarbonat, und einen Formkörper, umfassend ein Polyestercarbonat.

## Beschreibung

Die vorliegende Erfindung betrifft ein Verfahren zur Herstellung eines amorphen Polyestercarbonats umfassend Strukturen, abgeleitet von einem 1,4:3,6-Dianhydrohexitol und / oder Tricyclodecandimethanol, ein Polyestercarbonat, ebenfalls umfassend die genannten Strukturen, eine Formmasse, umfassend ein Polyestercarbonat, und einen Formkörper, umfassend ein Polyestercarbonat.

Es ist bekannt, dass Polyester, Polycarbonate sowie Polyestercarbonate gute Eigenschaften bezüglich Mechanik, Wärmeformbeständigkeit und Bewitterungsbeständigkeit aufweisen. Jede Polymergruppe weist in Abhängigkeit der verwendeten Monomere bestimmte Schlüsselmerkmale auf, durch die sich derartige Materialien auszeichnen. So weisen Polycarbonate insbesondere gute mechanische Eigenschaften auf, wohingegen Polyester häufig eine bessere Chemikalienbeständigkeit zeigen. Polyestercarbonate zeigen in Abhängigkeit der gewählten Monomere Eigenschaftsprofile aus beiden genannten Gruppen.

Insbesondere aromatische Polycarbonate oder Polyester zeigen in Bezug auf die Alterungs- und Bewitterungsbeständigkeit Schwächen. So kommt es beispielsweise durch Absorption von UV-Licht zur Vergilbung und ggf. Versprödung dieser thermoplastischen Materialien. Aliphatische Polycarbonate und Polyestercarbonate weisen diesbezüglich bessere Eigenschaften, insbesondere bessere Alterungs- und/oder Bewitterungsbeständigkeiten sowie bessere optische Eigenschaften (beispielsweise bessere Transmission) auf. Gleichzeitig existieren etablierte Verfahren, aromatische Polycarbonate oder Polyester zu verarbeiten. Dazu zählen unter anderem Spritzguss, (Co)Extrusion, Blasformverfahren oder Tiefziehen.

Der Nachteil aliphatischer Polycarbonate oder Polyestercarbonate ist häufig deren geringe Glasübergangstemperatur. Diese geringe Glastemperatur reduziert die Anwendungsmöglichkeiten und führt dazu, dass aliphatische Polycarbonate oder Polyestercarbonate häufig nicht als vollwertiger Ersatz zu klassischen aromatischen Polycarbonaten oder Polyestercarbonaten angesehen werden können.

Zudem weisen Verfahren zur Herstellung aliphatischer Polycarbonate, Polyester und Polyestercarbonate andere Herausforderungen auf als entsprechende Verfahren mit aromatischen Edukten bzw. Produkten. Polyester aus 1,4-Cylohexandimethanol und 1,4-Cyclohexandicarbonsäure werden beispielsweise ausgehend vom Dimethylester der Disäure hergestellt. Für die Umesterungsreaktion sind Phenylester aber deutlich reaktiver als ihre aliphatischen Analoga. In EP 3026074 A1 und in EP 3248999 A1 werden Verfahren zur Herstellung von Polyestercarbonaten mit Phenylester als Zwischenschritt beschrieben. Die Herstellung dieser Phenylester erfolgt aber ausgehend von den entsprechenden Säurechloriden. Diese wiederum werden mittels Phosgen hergestellt. Das Phosgen-Verfahren erfordert zusätzlich den Einsatz von Lösungsmitteln - meist halogenierte Lösungsmittel - welche aufwändig recycelt oder entsorgt werden müssen. Deshalb ist es von Vorteil, ein Phosgen-freies Verfahren zur Verfügung zu stellen, welches zudem bestenfalls keinen Einsatz von Lösungsmitteln benötigt.

Kricheldorf et al. beschreiben in Macromol. Chem. Phys. 2010, 211, 1206-1214 die Herstellung von Polyestern aus Isosorbid und Cyclohexandicarbonsäure. Um entsprechende Molmassen zu erhalten, verwenden sie die beiden Komponenten in äquimolaren Mengen. Unter diesen Bedingungen konnten sie jedoch kein Polymer aus der Reaktion von Isosorbid mit der freien Cyclohexandicarbonsäure erhalten. Für einen Molekulargewichtsaufbau war die Aktivierung der Säure durch die Verwendung eines Säurechlorids notwendig. Ebenso funktionierte auch die Verwendung eines Dimethylesters nicht gut.

In der EP 0 684 270 A2 wird die Herstellung von aliphatischen Polyestercarbonaten beschrieben. Dieses Dokument fokussiert sich im Wesentlichen auf die Verwendung von Bernsteinsäure und Butandiol. Ziel ist es, ein bioabbaubares Polyestercarbonat bereitzustellen, welches einen Schmelzpunkt von 70 - 180 °C aufweist. Damit betrifft dieses Dokument kristalline Polyestercarbonate. Hierbei wird in einem ersten Schritt Bernsteinsäure mit Butandiol unter Entfernung des entstehenden Wassers und des überschüssigen Butandiols verestert. Dadurch kann ein erhöhtes Molekulargewicht des Oligoesters erzielt werden, welches ausreichend groß ist, um die genannten Schmelzpunkte des finalen Polyestercarbonats zu erzielen und gleichzeitig klein genug, um noch eine gute Bioabbaubarkeit zu gewährleisten. Auf Grund der Schwindung sind jedoch kristalline Polyestercarbonate nicht besonders gut in den für aromatisches Polycarbonat gängigen Plastifiziermethoden verarbeitbar.

Die EP 0 823 449 A2 zielt auf die Verbesserung der thermischen Eigenschaften wie die Schmelzestabilität der in der EP 0 684 270 A2 genannten Polyestercarbonate ab. Dazu schlägt sie im Wesentlichen den Einbau verzweigter Strukturen in die Polyestercarbonatkette vor. Auch die dort offenbarten Polyestercarbonate sind kristallin.

In der EP 0 131 164 A1 wird die Herstellung von Polyestercarbonaten auf Basis von nichtaromatischen Dicarbonsäuren und nicht-aromatischem Diol beschrieben. Hierbei wird das Verfahren bei Erreichen eines gewünschten Kondensationsgrades reversibel gestoppt und danach weitergeführt. Die Herstellung der eingesetzten Oligoester, die zum Polyestercarbonat umgesetzt werden, wird nicht beschrieben. Die dort hergestellten Polyestercarbonate sind kautschukartig, fließfähig bei Raumtemperatur und weisen daher sehr geringe Glasübergangstemperaturen auf. Damit sind sie nicht in den für aromatisches Polycarbonat gängigen Plastifiziermethoden verarbeitbar.

Es ist des Weiteren bekannt, dass Polymereigenschaften durch den gezielten Einbau von Comonomeren beeinflusst werden können (siehe dazu auch den Einbau von trifunktionellen Monomeren in der oben beschriebenen EP 0 823 449 A2). Die noch nicht veröffentlichte PCT/EP2024/076755 optimiert beispielsweise die Eigenschaften wie Chemikalienbeständigkeit von Polyestercarbonaten auf Basis von Isosorbid durch den Einbau von speziellen Comonomeren. Diese Polyestercarbonate basieren unter anderem auf cycloaliphatischen Diolen. Zudem sind diese Polyestercarbonate linear. Das dort beschriebene Verfahren ist entweder ein one-pot-Verfahren, bei dem zumindest ein Teil der Säure mit Diphenylcarbonat reagiert oder ein Verfahren, bei dem mindestens zwei Äquivalent Diphenylcarbonat mit einem Äquivalent der Dicarbonsäure unter Ausbildung des Diphenylesters umgesetzt werden. Dabei werden zwei Äquivalente Kohlenstoffdioxid und zwei Äquivalente Phenol frei. Die so als Diester aktivierte Dicarbonsäure baut dann ins Polyestercarbonat ein. Unter ökologischen sowie ökonomischen Aspekten ist das beschriebene Verfahren jedoch noch verbesserbar. Durch die Freisetzung von Kohlenstoffdioxid ist insbesondere die Kohlenstoffbilanz des Verfahrens zur Herstellung des Polyestercarbonats optimierbar. Zudem ist auch optimierbar, dass durch die Freisetzung von Phenol ein relativ großes Reaktorvolumen benötigt wird.

Ausgehend vom Stand der Technik bestand daher die Aufgabe darin, mindestens einen Nachteil, bevorzugt alle Nachteile aus dem Stand der Technik zu überwinden. Insbesondere bestand die Aufgabe der vorliegenden Erfindung darin, ein Polyestercarbonat unter (Mit)Verwendung von aliphatischen Ausgangsstoffen bereitzustellen, welches in den für aromatisches Polycarbonat gängigen Plastifiziermethoden (z. B. Spritzguss, (Co)Extrusion, Blasformverfahren, Tiefziehen) verarbeitbar ist. Dazu sollte das Polyestercarbonat amorph sein und eine Glasübergangstemperatur von mindestens 90 °C aufweisen. Durch die (Mit)verwendung aliphatischer Ausgangsstoffe sollte das Polyestercarbonat gute optische Eigenschaften (insbesondere Transparenz) aufweisen. Dabei war es insbesondere eine Aufgabe, eine mit klassischen aromatischen Polycarbonaten vergleichbare Thermostabilität zu erzielen. Insbesondere lag der Erfindung die Aufgabe zu Grunde, ein Verfahren zur Herstellung eines Polyestercarbonats, bevorzugt eines Polyestercarbonats mit mindestens einer, besonders bevorzugt allen der zuvor genannten Eigenschaften, bereitzustellen, welches besonders einfach ist und dabei gleichzeitig ein Polyestercarbonat mit hoher Qualität und guten Eigenschaften liefert. Dabei sollte das Verfahren möglichst ökologisch und ökonomisch sinnvoll sein. Dies bedeutet bevorzugt, dass das Verfahren möglichst wenig Verfahrensschritte umfasst. Insbesondere bedeutet dies, dass das Verfahren eine vorteilhafte Kohlenstoffbilanz aufweist. Dabei sollte insbesondere ein Verfahren bereitgestellt werden, welches ohne Lösungsmittel und/oder der Verwendung schwer zu handhabender Stoffe wie beispielsweise Phosgen auskommt.

Mindestens eine der genannten Aufgaben, bevorzugt alle der genannten Aufgaben wurde durch die vorliegende Erfindung gelöst. Überraschend wurde gefunden, dass durch einen definierten Verfahrensablauf ein Polyestercarbonat erhalten werden konnte, welches die gewünschten Eigenschaften aufweist. Dazu wurden zunächst 1,4:3,6-Dianhydrohexitol und / oder Tricyclodecandimethanol mit einer Dicarbonsäure verestert. Die entstehende Verbindung (A) mit mindestens zwei Estergruppen weist dabei eine geringe Säurezahl auf. Dies bedeutet, dass die entstehende Verbindung im wesentlichen OH-terminiert ist. Im Anschluss wird diese Verbindung mit einem Diarylcarbonat und / oder Dialkylcarbonat zu einem Polyestercarbonat umgesetzt. Es war äußerst überraschend, dass die zuvor gebildete Verbindung (A) mit mindestens zwei Estergruppen effektiv in das Polyestercarbonat einbaut und ausreichend hohe Molekulargewichte erzielt werden konnten. Dabei wird ein "ausreichend hohes Molekulargewicht" bevorzugt als ein Polymer mit einer relativen Lösungsviskosität oberhalb von 1,20 verstanden, besonders bevorzugt von 1,21 bis 1,65, weiter bevorzugt von 1,22 bis 1,63, insbesondere bevorzugt von 1,23 bis 1,62 und besonderes bevorzugt von 1,26 bis 1,55. Die gezielte Auswahl von einem 1,4:3,6-Dianhydrohexitol und / oder Tricyclodecandimethanol als Diol führt zu Polyestercarbonaten, welche eine Glasübergangstemperatur von mindestens 90 °C aufweisen. Gleichzeitig sind diese beiden Diole herausfordernd für den Einbau in Polyestercarbonate. Insbesondere 1,4:3,6-Dianhydrohexitole wie Isosorbid weisen unterschiedlich reaktive OH-Gruppen auf. Daher ist es nicht immer möglich, diese Diole gezielt in ein Polymer einzubauen. Zudem ist auch bekannt, dass zu hohe Temperaturen 1,4:3,6-Dianhydrohexitole wie Isosorbid zersetzen können. Damit kann die mangelnde Reaktivität dieser Verbindung häufig nicht einfach durch erhöhte Reaktionstemperaturen ausgeglichen werden. Insbesondere bietet die vorliegende Erfindung den Vorteil, dass ein gezielter Aufbau der Polymerstruktur möglich ist. Es ist von großem Nutzen, bestimmte Monomere unabhängig von ihrer Reaktivität zuerst zur Reaktion zu bringen und diese als vorreagierte Produkte (Verbindung (A) mit mindestens zwei Estergruppen) in das Polyestercarbonat einzubauen. Damit ist die Polymerarchitektur besser steuerbar. Dies kann zu gezielten Eigenschaftsverbesserungen führen. So können die speziellen Diole 1,4:3,6-Dianhydrohexitol und / oder Tricyclodecandimethanol zuerst zur Reaktion gebracht werden im erfindungsgemäßen Verfahrensschritt (i), um diese vor thermischen Einflüssen und Oxidation zu schützen. Ferner ist es mit dem erfindungsgemäßen Verfahren möglich, nur bestimmte Monomere über Estergruppen zu verbrücken, wohingegen andere Monomere ggf. bevorzugt über Carbonateinheiten verbrückt werden. Dies kann ebenfalls fürs Eigenschaftsprofil des resultierenden Polyestercarbonats von Vorteil sein. Wenn z.B. bestimmte Estergruppen anfällig für Hydrolyse sind, macht es Sinn, den Anteil dieser Estergruppen im resultierenden Polyestercarbonat zu begrenzen. D.h. es ist von Vorteil, die Polymerarchitektur während des erfindungsgemäßen Verfahrens steuern zu können. Zudem ist der Reaktionsfortschritt des Verfahrensschritts (i) durch die Bestimmung der Säurezahl besonders einfach. Dies ist beispielsweise nicht der Fall, wenn anstatt der freien Säure ein Dimethylester eingesetzt wird. Zudem wird durch den Einsatz der freien Säure Wasser gebildet, welches einfach aus der Reaktion entfernt werden kann und zudem auch keine negativen Auswirkungen auf den anschließenden Verfahrensschritt (ii) hat (wie es beispielsweise Methanol hätte). Erfindungsgemäß hat sich herausgestellt, dass durch die Erzielung der niedrigen Säurezahl in Verfahrensschritt (i) im Vergleich zum Stand der Technik die Kohlenstoffbilanz deutlich verbessert werden kann. Im erfindungsgemäßen Verfahrensschritt (i) entsteht Wasser. Dieses kann einfach von der Verbindung (A) abgetrennt werden und erfordert keine zusätzlichen Sicherheitsvorkehrungen. Im Stand der Technik wird beispielsweise ein Diphenylester aktiviert durch die Reaktion der Dicarbonsäure mit zwei Äquivalenten Diphenylcarbonat. Dabei wird Kohlenstoffdioxid freigesetzt. Der zuvor gebundene Kohlenstoff geht somit "verloren", wodurch die Kohlenstoffbilanz im Stand der Technik nachteilig ist. Das erfindungsgemäße Verfahren ist somit ökologisch, aber auch ökonomisch vorteilhaft. Es erfordert keinen Einsatz von Lösungsmitteln. Zudem werden keine schwierig zu handhabenden Stoffe, wie beispielsweise Phosgen, benötigt. Es bietet insgesamt einen hohen Grad an Flexibilität, Polyestercarbonate selbst mit herausfordernden Aufbaueinheiten unter gleichzeitig ökologisch sehr vorteilhaften Bedingungen gezielt aufzubauen und zu erhalten. Dabei entstehen Polyestercarbonate, die in den für aromatisches Polycarbonat gängigen Plastifiziermethoden (z. B. Spritzguss, (Co)Extrusion, Blasformverfahren, Tiefziehen) verarbeitbar sind. Sie sind amorph und weisen eine Glasübergangstemperatur von mindestens 90 °C auf. Dabei bieten die erfindungsgemäßen Polyestercarbonate den Vorteil, dass die Eigenschaften ähnlich zu gängigen aromatischen Polycarbonaten sind. Dadurch, dass die erfindungsgemäßen Polyestercarbonate amorph sind, weisen sie insbesondere keine Schwindung auf. Der Begriff "Schwindung" ist im Zusammenhang mit Polymeren, insbesondere kristallinen Polymeren der Fachperson bekannt. Bevorzugt bezieht sich der Begriff auf den Effekt, dass bei der Abkühlung einer Polymerschmelze die Bildung von Kristallen zu einer Volumenverkleinerung führt. Dadurch nehmen das Volumen und die Abmessungen eines gespritzten Formteils im Vergleich zur ursprünglichen Form ab. Dies kann vermieden werden, wenn ein amorphes Polymer verwendet wird. Zwar können kristalline Polymere in Extrusions- oder Spritzgussverfahren verwendet werden, jedoch muss die Schwindung immer für den resultierenden Formkörper beachtet werden. Dadurch können aromatische Polycarbonate nicht einfach durch kristalline Polymere in Standardplastifizierverfahren ersetzt werden. Zudem sind die erfindungsgemäßen Polyestercarbonate linear, wodurch deren Aufbau im erfindungsgemäßen Verfahren gut und gezielt gesteuert werden kann. Durch die (Mit)Verwendung aliphatischer Ausgangsstoffe hat das erfindungsgemäße Polyestercarbonat gute optische Eigenschaften (insbesondere Transparenz). Zudem wurde eine mit klassischen aromatischen Polycarbonaten vergleichbare Thermostabilität erzielt. Bevorzugt ist das erfindungsgemäße Polyestercarbonat thermoplastisch. Erfindungsgemäß wird bevorzugt unter dem Begriff "thermoplastisch" ein Polymer verstanden, welches sich in einem Temperaturbereich, insbesondere oberhalb der Raumtemperatur, besonders bevorzugt oberhalb von 90 °C verformen lassen. Diese Verformung ist dabei bevorzugt reversibel. Insbesondere dient der Begriff "thermoplastisch" erfindungsgemäß bevorzugt der Abgrenzung von duromeren und/oder elastomeren Polymeren. Solche duromeren und/oder elastomeren Polymere weisen physikalische Vernetzungen der einzelnen Polymerketten auf, welche dazu führen, dass eine Verformung (welche über den elastischen Bereich hinausgeht) nicht reversibel ist. Solche Polymere können nicht durch gängige Plastifizierverfahren verformt / geformt werden.

Es wurde zudem erfindungsgemäß gefunden, dass ein weiterer Vorteil des erfindungsgemäßen Verfahrens die verbesserte Ausnutzung des Reaktorvolumens ist. Im erfindungsgemäßen Verfahrensschritt (i) entsteht durch die Reaktion der OH-Gruppen mit den Säuregruppen Wasser. Dieses braucht weniger Volumen als Phenol, welches klassischerweise im Stand der Technik durch die Reaktion der Säure mit Diphenylcarbonat entsteht. Zudem ist das Wasser aus dem Reaktionsgemisch des Verfahrensschritts (i) einfacher abtrennbar als Phenol. Insgesamt wird das Reaktorvolumen im erfindungsgemäße Verfahren effizienter als im Stand der Technik genutzt, was die Wirtschaftlichkeit des Verfahrens erhöht.

Erfindungsgemäß wird ein Verfahren zur Herstellung eines amorphen Polyestercarbonats mit einer Glasübergangstemperatur > 90 °C bereitgestellt, umfassend die Schritte
(i) Veresterung eines 1,4:3,6-Dianhydrohexitols und / oder von Tricyclodecandimethanol mit mindestens einer Dicarbonsäure und/oder einem Anhydrid einer Dicarbonsäure, um eine Verbindung (A) zu erhalten, die mindestens zwei Estergruppen und eine Säurezahl von kleiner 10 mg KOH/g aufweist und
(ii) Reaktion der Verbindung (A) mit mindestens einem Diarylcarbonat und / oder Dialkylcarbonat, um das Polyestercarbonat zu erhalten.

Durch die Abfolge zumindest der Verfahrensschritt (i) und (ii) kann die ökologische sowie ökonomische Vorteilhaftigkeit des erfindungsgemäßen Verfahrens sichergestellt werden.

### Verfahrensschritt (i)

In Verfahrensschritt (i) findet eine Veresterung statt. Der Begriff der "Veresterung" ist der Fachperson bekannt. Insbesondere wird darunter erfindungsgemäß die Reaktion des eines 1,4:3,6-Dianhydrohexitols und / oder des Tricyclodecandimethanols mit einer Dicarbonsäure und/oder einem Anhydrid einer Dicarbonsäure unter Abspaltung von Wasser verstanden. Insbesondere ist es bevorzugt, dass Verfahrensschritt (i) unter Entfernung des durch die Veresterung gebildeten Wassers durchgeführt wird. Eine solche Entfernung kann vollständig, im Wesentlichen vollständig oder auch nur teilweise erfolgen. Der Fachperson ist bewusst, dass durch die Entfernung des Wassers das Gleichgewicht der Veresterung in Verfahrensschritt (i) beeinflusst werden kann. Sie kann somit das für die entsprechende Verfahrensführung optimale Vorgehen wählen. Teilweise kann die Verfahrensführung des Verfahrensschritts (i) durch beispielsweise Temperaturführung und / oder Vakuumanlegen eine Entfernung des Wassers automatisch mit sich bringen.

Erfindungsgemäß werden im Verfahrensschritt (i) ein 1,4:3,6-Dianhydrohexitol und / oder Tricyclodecandimethanol verwendet. Beide Diole sind cycloaliphatisch. Damit nehmen sie Einfluss auf die Glasübergangstemperatur des resultierenden Polyestercarbonats.

Wie der Fachperson bekannt ist, werden 1,4:3,6-Dianhydrohexitole in der Regel ausgewählt aus der Gruppe, bestehend aus Isomannid, Isoidid und Isosorbid. Dabei kann es sich um eine biobasierte Verbindung handeln, womit alle Vorteile eines biobasierten Monomers und dem daraus resultierenden Polymer einhergehen (z.B. bessere Nachhaltigkeit, da aus nachwachsenden Rohstoffen zugänglich). Besonders bevorzugt ist das erfindungsgemäße Verfahren dadurch gekennzeichnet, dass das mindestens eine 1,4:3,6-Dianhydrohexitol Isosorbid ist.

Tricyclodecandimethanol wird auch bezeichnet als TCD-Alkohol oder [8-(hydroxymethyl)-3-tricyclo[5.2.1.02,6]decanyl]methanol). Tricyclodecandimethanol liegt in der Regel als Isomerengemisch vor. Es sind bis zu 32 Isomere möglich. Je nach Reaktionsbedingungen der Polymerisation können sich die Ausgangsanzahl und/oder -arten der Isomere des Monomers auch im resultierenden Polymer ändern.

Bevorzugt wird die Dicarbonsäure in Verfahrensschritt (i) ausgewählt aus der Gruppe, bestehend aus den durch Formel (1), (2) und (3) dargestellten Verbindungen, Sebazinsäure, Furandicarbonsäure, Napthalindicarbonsäure, Phthalsäure, Isophthalsäure und Terephthalsäure oder den entsprechenden Anhydriden der genannten Säuren, wobei 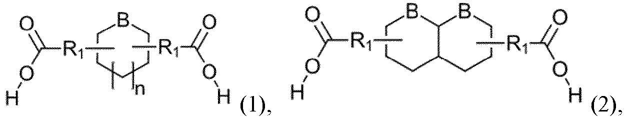
worin in den Formeln (1) und (2)
B jeweils unabhängig voneinander für eine CH₂-Gruppe oder ein Heteroatom, welches ausgewählt ist aus der Gruppe, bestehend aus O und S, bevorzugt eine CH₂-Gruppe oder ein Sauerstoffatom, steht,
R₁ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht und
n eine Zahl zwischen 0 und 3, bevorzugt 0 oder 1 ist, und 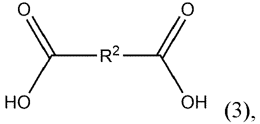
worin in der Formel (3) jedes R² unabhängig voneinander für eine aliphatische Gruppe mit 16 bis 44 Kohlenstoffatomen steht, welche gegebenenfalls ein oder mehrere Doppelbindungen enthält.

Der Fachperson ist ersichtlich, wie die Anhydride der genannten Dicarbonsäuren aussehen. Besonders bevorzugt sind hier Sebazinsäureanhydrid und Phthalsäureanhydrid.

Dabei ist es bevorzugt, dass die mindestens eine Dicarbonsäure eine aliphatische Dicarbonsäure ist. Damit sind Furandicarbonsäure, Napthalindicarbonsäure, Phthalsäure, Isophthalsäure und Terephthalsäure aus der oben beschriebenen Gruppe zu streichen. Besonders bevorzugt handelt es sich bei der mindestens einen Dicarbonsäure um eine Mischung aus mindestens einer aliphatischen Dicarbonsäure, bevorzugt ausgewählt aus den oben beschriebenen Dicarbonsäuren, und mindestens einer aromatischen Dicarbonsäure, bevorzugt ausgewählt aus Furandicarbonsäure, Naphthalindicarbonsäure, Phthalsäure, Isophthalsäure und Terephthalsäure. Ganz besonders bevorzugt ist die Kombination aus 1,4-Cyclohexandicarbonsäure und Terephthalsäure. Ebenso besonders bevorzugt ist die Kombination aus Dimerfettsäure und Terephthalsäure.

In Bezug auf Formel (1) und (2) versteht es sich, dass wenn R₁ eine Einfachbindung darstellt, R₁ somit Null Kohlenstoffatome umfasst.

Insbesondere ist es bevorzugt, dass die Dicarbonsäure der Formel (1) bzw. (2) ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure Decahydro-2,4-naphthalindicarbonsäure, Decahydro-2,5-naphthalindicarbonsäure, Decahydro-2,6-naphthalindicarbonsäure und Decahydro-2,7-naphthalindicarbonsäure. Es können auch beliebige Mischungen eingesetzt werden. Ganz besonders bevorzugt handelt es sich um 1,4-Cyclohexandicarbonsäure, 1,3-Cyclohexandicarbonsäure oder 1,2-Cyclohexandicarbonsäure.

Besonders bevorzugt steht jedes R² in Formel (3) unabhängig voneinander für eine aliphatische Gruppe mit 17 bis 44 Kohlenstoffatomen, insbesondere bevorzugt mit 18 bis 44 Kohlenstoffatomen, insbesondere bevorzugt mit 19 bis 44 Kohlenstoffatomen, insbesondere bevorzugt mit 20 bis 44 Kohlenstoffatomen, insbesondere bevorzugt mit 21 bis 44 Kohlenstoffatomen, insbesondere bevorzugt mit 22 bis 43 Kohlenstoffatomen, insbesondere bevorzugt mit 23 bis 42 Kohlenstoffatomen, insbesondere bevorzugt mit 24 bis 41 Kohlenstoffatomen, insbesondere bevorzugt mit 25 bis 40 Kohlenstoffatomen, insbesondere bevorzugt mit 26 bis 39 Kohlenstoffatomen, insbesondere bevorzugt mit 27 bis 38 Kohlenstoffatomen, insbesondere bevorzugt mit 28 bis 37 Kohlenstoffatomen, insbesondere bevorzugt mit 29 bis 37 Kohlenstoffatomen, insbesondere bevorzugt mit 30 bis 37 Kohlenstoffatomen, insbesondere bevorzugt mit 31 bis 37 Kohlenstoffatomen, insbesondere bevorzugt mit 32 bis 37 Kohlenstoffatomen und ganz besonders bevorzugt mit 33 bis 37 Kohlenstoffatomen.

Im Kontext der vorliegenden Erfindung bezieht sich der Begriff "aliphatisch" beziehungsweise "aliphatische Gruppe", soweit nicht anders definiert, auf eine Kohlenwasserstoff-Gruppe, welche keine aromatischen Einheiten aufweist. Jedoch kann diese Gruppe ein oder mehrere Doppelbindungen aufweisen. Zudem kann diese Gruppe einen oder mehrere Zyklen aufweisen. Diese Zyklen können miteinander kondensiert sein (d. h. zum Beispiel ein oder mehrere Kohlenstoffatome können zwei Zyklen angehören) oder durch beispielsweise Alkylen-Gruppen oder Alkylidengruppen miteinander verbunden sein. Dieser eine oder die mehreren Zyklen können ein oder mehrere Doppelbindungen aufweisen. Dabei ist jedoch zu beachten, dass aromatischen Zyklen erfindungsgemäß von der Definition "aliphatisch" nicht umschlossen sind. Zudem kann der ein oder die mehreren Zyklen beziehungsweise die aliphatische Gruppe an sich durch ein oder mehrere Heteroatome unterbrochen sein. Dies ist jedoch weniger bevorzugt.

Im Kontext der vorliegenden Erfindung bezieht sich der Begriff "Alkyl" bzw. "Alkylgruppe" bevorzugt und soweit nicht anders angegeben auf eine Alkanstruktur, von der ein Wasserstoffatom entfernt wurde. Die Alkylgruppe gemäß der vorliegenden Erfindung kann linear oder verzweigt sein. Sie ist gesättigt und umfasst daher nur Einfachbindungen zwischen den benachbarten Kohlenstoffatomen. Bevorzugt umfasst die Alkylgruppe Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl und dergleichen. Die Auswahl dieser Strukturen kann begrenzt sein, wenn im Rahmen der vorliegenden Erfindung die Anzahl der Kohlenstoffatome anders definiert wird.

Im Kontext der vorliegenden Erfindung bezieht sich der Begriff "Alkylen" bzw. "Alkylengruppe" bevorzugt und soweit nicht anders angegeben auf eine verbrückende Alkanstruktur, von der zwei Wasserstoffatome von unterschiedlichen Kohlenstoffatomen entfernt wurden. In diesem Kontext können die zwei Wasserstoffatome, die von den zwei Kohlenstoffatomen entfernt wurden, von beliebigen Kohlenstoffatomen in der Alkanstruktur entfernt werden. Dies bedeutet, dass die beiden Kohlenstoffatome benachbart sein können, aber nicht zwingend benachbart sein müssen. Eine Alkylengruppe kann linear oder verzweigt sein. Sie ist gesättigt. Wenn die Alkylengruppe nur ein Kohlenstoffatom umfasst, handelt es sich um eine Methylengruppe (-CH₂-), welche mit dem Rest des Moleküls über zwei Einfachbindungen verbunden ist. Bevorzugt umfasst die Alkylengruppe Methylen, Ethylen, n-Propylen, iso-Propylen, n-Butylen, sec-Butylen, tert-Butylen, n-Pentylen, 1-Methylbutylen, 2-Methylbutylen, 3-Methylbutylen, Neopentylen, 1-Ethylpropylen, n-Hexylen, 1,1-Dimethylpropylen, 1,2-Dimethylpropylen, 1,2-Dimethylpropylen, 1-Methylpentylen, 2-Methylpentylen, 3-Methylpentyln, 4-Methylpentylen, 1,1-Dimethylbutylen, 1,2-Dimethylbutylen, 1,3-Dimethylbutylen, 2,2-Dimethylbutylen, 2,3-Dimethylbutylen, 3,3-Dimethylbutylen, 1-Ethylbutylen, 2-Ethylbutylen, 1,1,2-Trimethylpropylen, 1,2,2-Trimethylpropylen, 1-Ethyl-1-methylpropylen, 1-Ethyl-2-methylpropylen, 1-Ethyl-2-methylpropylen und dergleichen. Die Auswahl dieser Strukturen kann begrenzt sein, wenn im Rahmen der vorliegenden Erfindung die Anzahl der Kohlenstoffatome anders definiert wird. Zudem kann die Alkylengruppe gemäß der vorliegenden Erfindung gegebenenfalls mindestens eine Carbonylgruppe aufweisen, gegebenenfalls mindestens ein Halogenatom aufweisen und/oder gegebenenfalls durch mindestens ein Heteroatom unterbrochen sein. Beispiele für solche Alkylengruppen sind -C(=O)-(CH₂)₄-C(=O)-, -C(=O)-(CH₂)₃-C(=O)-, - C(=O)-(CH₂)₂-C(=O)-, -C(CF₃)₂, -O-(CH₂)₄-O-, -O-(CH₂)₃-O-, -O-(CH₂)₂-O- und dergleichen. Die vorgenannten Strukturen sind erfindungsgemäß jedoch weniger bevorzugt. Zudem wird erfindungsgemäß auch von einer "Cycloalkylen-Gruppe" gesprochen. Hierbei treffen die oben genannten Ausführungen zu mit dem Zusatz, dass die Gruppe zusätzlich einen oder mehrere Zyklen aufweisen kann. Diese Zyklen können miteinander kondensiert sein (d.h. zum Beispiel ein oder mehrere Kohlenstoffatome können zwei Zyklen angehören) oder durch beispielsweise Alkylen-Gruppen miteinander verbunden sein. Dieser eine oder die mehreren Zyklen können ein oder mehrere Doppelbindungen aufweisen. Zudem kann der ein oder die mehreren Zyklen beziehungsweise die aliphatische Gruppe an sich durch ein oder mehrere Heteroatome unterbrochen sein. Dies ist jedoch weniger bevorzugt.

Im Kontext der vorliegenden Erfindung bezieht sich der Begriff "Alkyliden" bzw. "Alkylidengruppe" bevorzugt und soweit nicht anders angegeben auf eine verbrückende Alkanstruktur, bei der zwei Wasserstoffatome von demselben Kohlenstoffatom entfernt wurden. Die Alkylidengruppe umfasst gegebenenfalls mindestens eine Kohlenstoff-Kohlenstoff-Doppelbindung, gegebenenfalls mindestes eine Carbonyl-Gruppe und/oder gegebenenfalls mindestens ein Halogenatom. Bevorzugt umfasst die Alkylidengruppe isoPropyliden, n-Propyliden, iso-Heptyliden und dergleichen.

Im Kontext der vorliegenden Erfindung bezieht sich der Begriff "Aralkyl" bevorzugt und soweit nicht anders angegeben in jedem Fall unabhängig voneinander auf eine lineare, cyclische oder verzweigte Alkylgruppe, welche einfach, zweifach oder mehrfach mit Arylresten substituiert ist. Im Kontext der vorliegenden Erfindung bezieht sich der Begriff "Aryl" bevorzugt und soweit nicht anders angegeben auf einen aromatischen Kohlenwasserstoffrest. Beispiele für "Aryl" sind Phenyl, *o-, p-, m*-Toluyl, Naphthyl, Phenanthryl oder Anthrancenyl.

Im Kontext der vorliegenden Erfindung bezieht sich der Begriff "Alkoxy" bzw. "Alkoxygruppe" bevorzugt und soweit nicht anders angegeben auf eine lineare, cyclische oder verzweigte Alkylgruppe, welche einfach an ein Sauerstoffatom gebunden (-OR) ist. Bevorzugt weisen Alkoxygruppen gemäß der vorliegenden Erfindung 1 bis 6 Kohlenstoffatome auf. Besonders bevorzugt umfassen Alkoxygruppen Methoxy, Ethoxy, *n*-Propoxy, iso-Propoxy, *n-*Butoxy, *sec*-Butoxy, *tert*-Butoxy, *n*-Pentoxy, 1-Methylbutoxy, 2-Methylbutoxy, 3-Methylbutoxy, neo-Pentoxy, 1-Ethylpropoxy, Cyclohexoxy, Cyclopentoxy, *n*-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy. Die Auswahl dieser Strukturen kann begrenzt sein, wenn im Rahmen der vorliegenden Erfindung die Anzahl der Kohlenstoffatome anders definiert wird.

Basierend auf den oben genannten Definitionen ist die Fachperson in der Lage, weitere Definitionen, welche nicht explizit oben genannt sind, zu verstehen.

Erfindungsgemäß ist es bevorzugt, dass R² in der Formel (3) dargestellt wird durch die folgende Formel (R2A) mit 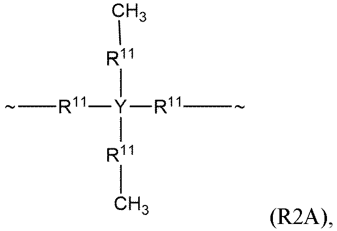
wobei Y für eine verbrückende Struktur steht, die ausgewählt wird aus der Gruppe, bestehend aus einer Alkylen-Gruppe mit 1 bis 4 Kohlenstoffatomen, einer Alkyliden-Gruppe mit 1 bis 4-Kohlenstoffatomen und einer Cycloalkylen-Gruppe mit 4 bis 12 Kohlenstoffatomen, bevorzugt 4 bis 10 Kohlenstoffatomen, wobei die Cycloalkylen-Gruppe gegebenenfalls eine oder mehrere Doppelbindungen enthält und/oder gegebenenfalls an eine oder mehrere weitere Cycloalkylen-Gruppen kondensiert ist, wobei die eine oder mehreren weiteren Cycloalkylengruppen gegebenenfalls jeweils eine oder mehrere Doppelbindungen aufweisen,
wobei die an die verbrückende Struktur angrenzenden R¹¹-Gruppen an eine beliebige Position der verbrückenden Struktur gebunden sind und
wobei jedes R¹¹ unabhängig voneinander für eine Alkylen-Gruppe mit 1 bis 12 Kohlenstoffatomen oder eine Alkyliden-Gruppe mit 1 bis 12 Kohlenstoffatomen steht, mit der Maßgabe dass die Struktur der Formel (R2A) 16 bis 44 Kohlenstoffatome umfasst und wobei die mit "~" gekennzeichneten Positionen in der Formel (R2A) die Positionen sind, an denen sich jeweils die in Formel (3) gezeigten (C=O)-Gruppen befinden.

Besonders bevorzugt wird die Formel (R2A) dargestellt durch eine der Formeln (R2Aa), (R2Ab), (R2Ac) oder (R2Ad), mit 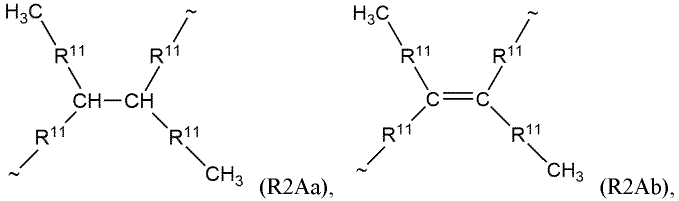 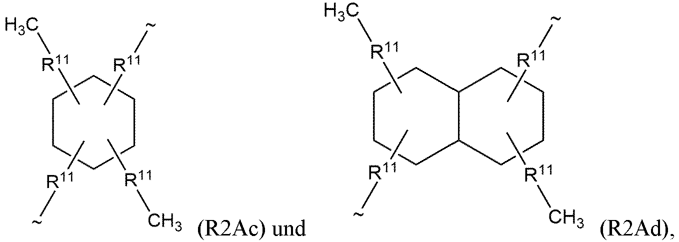 wobei jedes R¹¹ und jedes "~" die zu (R2A) genannten Bedeutungen hat, der Zyklus der Formel (R2Ac) gegebenenfalls eine oder zwei Doppelbindungen aufweist und jeder Zyklus der Formel (R2Ad) unabhängig voneinander gegebenenfalls eine oder zwei Doppelbindungen enthält. Es ist zudem besonders bevorzugt, dass R² in der Formel (3) dargestellt wird aus einer Mischung von mindestens zwei unterschiedlichen Formeln (R2Aa), (R2Ab), (R2Ac) und (R2Ad). Dabei sind auch Mischungen aus unterschiedlichen Gruppen, welche aber unter die gleiche Formel fallen (also zum Beispiel zwei Gruppen, welche unter die Formel (R2Aa)), umfasst.

Wie bereits oben näher erläutert, können die Zyklen der Formeln (R2Ac) und/oder (R2Ad) jeweils eine oder zwei Doppelbindungen aufweisen. Dabei ist in der Regel nicht umfasst, dass ein aromatischer Ring entsteht. Wie weiter unten erläutert, kann es sein, dass, wenn R² in der Formel (3) eine Mischung von mindestens zwei unterschiedlichen Formeln (R2Aa), (R2Ab), (R2Ac) und (R2Ad) umfasst, ebenfalls geringe Anteile an aromatischen verbrückenden Strukturen Y gemäß Formel (R2A) enthalten sind. Dies ist jedoch weniger bevorzugt.

Besonders bevorzugt steht jedes R¹¹ in der Formel (R2A) und/oder in den Formeln (R2Aa), (R2Ab), (R2Ac) oder (R2Ad) unabhängig voneinander für eine Alkylen-Gruppe mit 1 bis 10 Kohlenstoffatomen, mit der Maßgabe dass die Struktur der Formel (R2A) und/oder in den Formeln (R2Aa), (R2Ab), (R2Ac) oder (R2Ad) 16 bis 44 Kohlenstoffatome umfasst.

Ebenso bevorzugt ist, dass die durch R², (R2A), (R2Aa), (R2Ab), (R2Ac) und/oder (R2Ad) beschriebene Gruppe in der Formel (3) 21 bis 44 Kohlenstoffatome aufweist. Genauso bevorzugt ist es, dass die durch R², (R2A), (R2Aa), (R2Ab), (R2Ac) und/oder (R2Ad) beschriebene Gruppe in der Formel (3) 17 bis 44 Kohlenstoffatome, insbesondere bevorzugt 18 bis 44 Kohlenstoffatome, insbesondere bevorzugt 19 bis 44 Kohlenstoffatome, insbesondere bevorzugt 20 bis 44 Kohlenstoffatome, insbesondere bevorzugt 21 bis 44 Kohlenstoffatome, insbesondere bevorzugt 22 bis 43 Kohlenstoffatome, insbesondere bevorzugt 23 bis 42 Kohlenstoffatome, insbesondere bevorzugt 24 bis 41 Kohlenstoffatome, insbesondere bevorzugt 25 bis 40 Kohlenstoffatome, insbesondere bevorzugt 26 bis 39 Kohlenstoffatome, insbesondere bevorzugt 27 bis 38 Kohlenstoffatome, insbesondere bevorzugt 28 bis 37 Kohlenstoffatome, insbesondere bevorzugt 29 bis 37 Kohlenstoffatome, insbesondere bevorzugt 30 bis 37 Kohlenstoffatome, insbesondere bevorzugt 31 bis 37 Kohlenstoffatome, insbesondere bevorzugt 32 bis 37 Kohlenstoffatome und ganz besonders bevorzugt 33 bis 37 Kohlenstoffatome aufweist. Die Fachperson ist in der Lage, diese begrenzte Anzahl an Kohlenstoffatomen auf die oben getroffenen Maßgaben in Bezug auf die Anzahl an Kohlenstoffatomen zu übertragen.

Es ist insbesondere bevorzugt, dass die unterschiedlichen R¹¹ in der Formel (R2A) und/oder in den Formeln (R2Aa), (R2Ab), (R2Ac) oder (R2Ad) eine unterschiedliche Anzahl an Kohlenstoffatomen umfassen.

Ganz besonders bevorzugt handelt es sich bei Formel (3) um Dimerfettsäure. Der Fachperson ist bekannt, dass Dimerfettsäure ein Gemisch aus verschiedenen Säuren ist. Die überwiegenden Strukturen sehen wie folgt aus (insbesondere nach Hydrierung der Doppelbindungen).

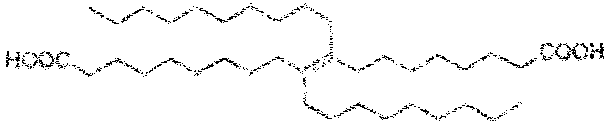

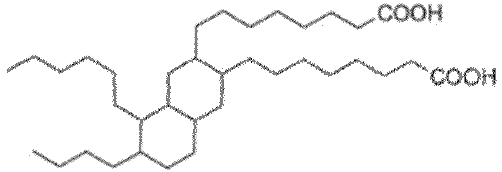

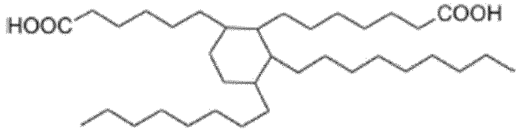

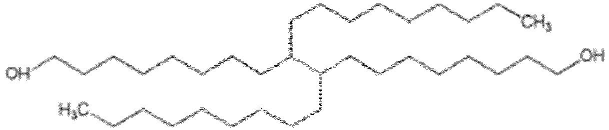

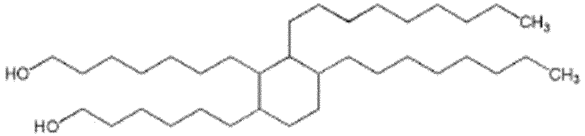

Dabei werden bevorzugt vollständig hydrierte Verbindungen eingesetzt. Bei Dimerfettsäure handelt sich in der Regel um ein Gemisch. Dazu wird eine Fettsäure mit konjugierten Doppelbindungen (Konjuensäure) mit weitere(n) ungesättigte(n) Fettsäuren zur Reaktion gebracht. Besonders bevorzugt werden dafür konjugierte Linolsäuren verwendet. Die Reaktion erfolgt in der Regel mittels Diels-Alder-Addition, wodurch sich ein teilweise ungesättigter C6-Ring bildet. Damit umfasst Dimerfettsäure zunächst zumindest teilweise eine oder mehrere Doppelbindungen. Die Mischung von Dimerfettsäuren kann neben dem Dimer auch Trimere sowie Monomere der Fettsäuren umfassen. Besonders bevorzugt werden Ölsäure und Linolsäure zur Reaktion gebracht. Die in der Dimerfettsäure enthaltenen Doppelbindungen werden in der Regel hydriert.

Ganz besonders bevorzugt handelt es sich bei Formel (3) um Dimerfettsäure mit 36 Kohlenstoffatomen.

Dimerfettsäuren sind kommerziell erhältlich und z.B. unter den Handelsnamen Pripol 1009, Pripol 1006, Pripol 1025, Radiacid 0960, Radiacid 0975, Radiacid 0976, Radiacid 0977, Radiacid 0978, Unidyme 18 bekannt. Pripol und Pripolderivate werden, wie oben beschrieben, durch Oligomerisierung von ungesättigten Fettsäuren - bevorzugt C18-Säuren hergestellt. Durch Dimerisierung wird ein Gemisch aus Mono-, Di- und Tricarboxysäuren erhalten. Die Mono-funktionellen Verbindungen werden zumeist durch Destillation abgetrennt. Typischerweise wird dann eine Gemisch aus 80 % Di-funktioneller und 20 % Tri-funktioneller Verbindungen erhalten, welches durch Destillation weiter aufgereinigt wird, um die Difunktionellen Verbindungen anzureichern. Durch Hydrierung erhält man die gesättigten Verbindungen. Pripol als Dimerfettsäure ist ein aufgereinigtes Gemisch umfassend überwiegend C36 - Disäure.

Durch die Veresterung in Verfahrensschritt (i) entsteht eine Verbindung (A), die mindestens zwei Estergruppen aufweist. Dies bedeutet, dass die Dicarbonsäure im Wesentlichen mit beiden Säuregruppen reagiert. Dadurch kann erfindungsgemäß auch eine Säurezahl von kleiner 10 mg KOH/g erzielt werden. Die Verbindung (A), welche mindestens zwei Estergruppen aufweist, weist bevorzugt eine Säurezahl von kleiner 9 mg KOH/g, besonders bevorzugt kleiner 5 mg KOH/g. In diesem Kontext ist ersichtlich, dass der Ausdruck "kleiner" in der Regel bedeutet, dass ein Bereich von 0 mg KOH/g bis zur angegebenen Zahl gemeint ist. Besonders bevorzugt ist ein Bereich von größer 0 mg KOH/g bis zur angegeben Zahl gemeint. Bevorzugt wird die Säurezahl der Verbindung (A) gemäß ISO 2114:2000 bestimmt. Es wurde gefunden, dass, wenn die Säurezahl im erfindungsgemäßen Bereich liegt, das Verfahren besonders ökologisch vorteilhaft ist. Insbesondere weist das Verfahren eine gute Kohlenstoffbilanz auf. In Verfahrensschritt (i) entsteht durch die Veresterung im Wesentlichen Wasser und in Verfahrensschritt (ii) stehen nur noch wenige Säuregruppen zur Verfügung, welche dann ggf. mit dem Diarylcarbonat und/oder Dialkylcarbonat unter Freisetzung von Kohlenstoffdioxid reagieren können. Somit geht durch die erfindungsgemäße Säurezahl nur ein ganz geringer Anteil an Kohlenstoff als Kohlenstoffdioxid verloren.

Bevorzugt wird Verfahrensschritt (i) in Anwesenheit mindestens eines Katalysators durchgeführt. Ebenso bevorzugt wird der mindestens eine Katalysator ausgewählt aus der Gruppe, bestehend aus Organo-Zink- oder Zinn-Verbindungen. Die Verwendung dieser Art von Katalysator ist im Stand der Technik bekannt. Zu den Katalysatoren, die in der vorliegenden Erfindung bevorzugt sind, gehören unter anderem Zinkacetat, Butylzinn-tris-2-ethylhexanoat, Dibutylzinndiacetat und/oder Dibutylzinnoxid. Weitere Katalysatoren können unter anderem solche auf Basis von Titan, Zink, Mangan, Lithium, Germanium und Kobalt sein. Besonders bevorzugt sind Titantetraisopropoxid, Titanbutoxid, Magnesiumacetat, Antimonoxid, Antimontriacetat oder beliebige Mischungen davon. Die Katalysatormengen können von 10 ppm bis 20.000 ppm oder 10 bis 10.000 ppm oder 10 bis 5000 ppm oder 10 bis 1000 ppm oder 10 bis 500 ppm oder 10 bis 300 ppm oder 10 bis 250 ppm reichen, bezogen auf den Katalysator und bezogen auf das Gewicht des Produkts des Verfahrensschritts (i). Dabei ist darauf zu achten, dass der eingesetzte in Verfahrensschritt (i) eingesetzte Katalysator in Verfahrensschritt (ii) keine nachteilige Wirkung auf die Reaktion bzw. auf das entstehende Polyestercarbonat hat. Wie die erfindungsgemäßen Beispiele zeigen, kann aber der Katalysator des Verfahrensschritt (i) auch in Verfahrensschritt (ii) verwendet werden, um Molekulargewicht aufzubauen.

Verfahrensschritt (i) kann in Lösung oder in Substanz durchgeführt werden. Er kann beispielsweise auch azeotropisch durchgeführt werden. Bevorzugt wird Verfahrensschritt (i) in der Schmelze durchgeführt. Dabei ist es besonders bevorzugt, dass das entstehende Wasser entfernt wird. Die Entfernung des Wassers kann bevorzugt mittels Destillation oder Vakuum erfolgen. Besonders bevorzugt erfolgt die Entfernung des entstehenden Wassers zunächst mittels Destillation gefolgt vom Anlegen eines Vakuums. Dabei ist zu beachten, dass das Vakuum nicht zu niedrig ist, damit kein 1,4:3,6-Dianhydrohexitol und / oder Tricyclodecandimethanol aus dem Verfahrensschritt (i) entfernt wird. In diesem Fall kann jedoch auch über Messung der OH-Zahl und der Säurezahl die verloren gegangene Menge berechnet und ausgeglichen werden. Das erfindungsgemäße Verfahren hat insbesondere den Vorteil, dass es eine gut steuerbare Reaktion ist. Dies bedeutet insbesondere, dass durch die Nachverfolgbarkeit der Säurezahl und auch ggf. der OH-Zahl die Stöchiometrie für den Verfahrensschritt (ii) weiterhin exakt eingestellt werden kann. Dies kann beispielsweise durch Hinzufügen weiterer Komponenten in Verfahrensschritt (i) und/oder (ii) erfolgen. Insgesamt lassen sich so Polyestercarbonate sehr gezielt herstellen.

Des Weiteren umfasst der erfindungsgemäße Verfahrensschritt (i) bevorzugt mindestens einen, besonders bevorzugt alle der folgenden Schritte (ia) bis (ic):
(ia) Aufschmelzen aller in Verfahrensschritt (i) anwesenden Komponenten, also mindestens der Dicarbonsäure und des 1,4:3,6-Dianhydrohexitols und / oder des Tricyclodecandimethanols gegebenenfalls in Anwesenheit mindestens eines Katalysators. Dies erfolgt bevorzugt unter Schutzgasatmosphäre, bevorzugt unter Stickstoff und/oder Argon. Bevorzugt erfolgt der Schritt (ia) in Abwesenheit eines Lösungsmittels. Der Begriff "Lösungsmittel" ist in diesem Zusammenhang der Fachperson bekannt. Erfindungsgemäß wird unter dem Begriff "Lösungsmittel" bevorzugt eine Verbindung verstanden, die in keinem der Verfahrensschritte (i) und/oder (ii) eine chemische Reaktion eingeht. Ausgenommen sind solche Verbindungen, welche durch die Reaktion entstehen (beispielsweise Wasser aus der Veresterungsreaktion des Verfahrensschritts (i). Das Lösungsmittel kann auch die Funktion eines Schleppmittels übernehmen, um das entstehende Wasser azeotropisch zu entfernen. Selbstverständlich kann nicht ausgeschlossen werden, dass die Ausgangsverbindungen Spuren von Lösungsmitteln enthalten. Dieser Fall soll erfindungsgemäß bevorzugt umfasst sein. Jedoch wird erfindungsgemäß bevorzugt ein aktiver Schritt der Zugabe eines solchen Lösungsmittels vermieden, da dieses vor Verfahrensschritt (ii) entfernt werden muss. Zudem kann das Lösungsmittel auch die Bestimmung der OH- und / oder Säurezahl erschweren.
(ib) Erhitzen des Gemisches, bevorzugt der aus Schritt (ia) erhaltenen Schmelze. Dabei können Schritt (ia) und Schritt (ib) auch überlappen, da zur Erzeugung einer Schmelze in Schritt (ia) ebenfalls ein Erhitzen notwendig sein kann. Das Erhitzen erfolgt bevorzugt zunächst auf 100 °C bis 250 °C.
(ic) Reaktion des Gemisches, bevorzugt des aus Schritt (ib) erhaltenen Gemisches unter Einbringung von Mischenergie, bevorzugt durch Rühren. Auch hier kann der Schritt (ic) mit dem Schritt (ib) überlappen, da durch das Erhitzen bereits die Reaktion des Gemisches initiiert werden kann. Bevorzugt ist die Schmelze dabei bereits durch Schritt (ib) unter Normaldruck auf Temperaturen zwischen 100 und 250 °C aufgeheizt. Je nach gewähltem Katalysator kann die Temperatur im Bereich 160 - 200 °C belassen werden. Alternativ wird die Temperatur in Schritt (ic) schrittweise - je nach beobachteter Reaktivität - auf 200°C - 300 °C, bevorzugt 210 - 260 °C, insbesondere bevorzugt 215 - 255 °C erhöht. Dabei ist es bevorzugt, dass die Temperatur nur so hoch ist, dass das entstehende Wasser unter 100 °C (bei Normaldruck) aus dem Gemisch entfernt werden kann. Prinzipiell sind auch höhere Temperaturen in diesem Schritt möglich, jedoch kann es bei höheren Temperaturen zu Nebenreaktionen kommen (z.B. Verfärbungen). Daher sind höhere Temperaturen weniger bevorzugt. Bevorzugt startet der Verfahrensschritt (ic) unter Normaldruck durchgeführt und dabei wird das entstehende Wasser abdestilliert. Über die Temperaturführung ist die Reaktionszeit dieses Verfahrensschritts beeinflussbar. Bevorzugt wird anschließend Vakuum angelegt, um verbleibendes Wasser aus dem Verfahrensschritt zu entfernen und gegebenenfalls das Gleichgewicht der Veresterungsreaktio zu verschieben, bis die gewünschte erfindungsgemäß definierte Säurezahl erreicht ist.

Die Reaktionszeit in Schritt (ic) hängt von der Menge der Einsatzstoffe, insbesondere dem Katalysator, dem genutzten Temperaturprofil und ggf. auch den Rührbedingungen ab.

Verfahrensschritt (i) kann sowohl batchweise als auch kontinuierlich durchgeführt werden. Auf Grund der Reaktionszeit kann es vorteilhaft sein, Verfahrensschritt (i) batchweise durchzuführen. Daher ist es bevorzugt, dass Verfahrensschritt (i) batchweise durchgeführt wird. Hierfür kommen alle der Fachperson geläufigen Reaktoren in Betracht. Wird das Verfahren kontinuierlich durchgeführt, so könnte Verfahrensschritt (i) beispielsweise in einem Rohrreaktor durchgeführt werden. Wird das Verfahren batchweise durchgeführt, so kommt insbesondere die Nutzung eines Rührkessels in Betracht.

Es ist möglich, dass nach Verfahrensschritt (i) die Verbindung (A) zunächst isoliert und optional aufgereinigt wird. Ebenso ist es möglich, dass die Mischung, so wie sie nach Verfahrensschritt (i) erhalten wird, direkt in Verfahrensschritt (ii) eingesetzt wird. Dies ist bevorzugt, da es weniger aufwendig und damit ökonomisch und ökologisch vorteilhaft ist. Insbesondere wenn die Mischung, so wie sie nach Verfahrensschritt (i) erhalten wird, direkt in Verfahrensschritt (ii) eingesetzt wird, ist es auch möglich, die Stöchiometrie für Verfahrensschritt (ii) einzustellen. Durch Vakuum können Diole in Verfahrensschritt (i) werden. Die verlorene Menge kann über die OH-Zahl bestimmt werden. Sie kann durch Hinzufügen von Komponenten in Verfahrensschritt (i) oder (ii) wieder ausgeglichen werden. Entweder kann eine Dicarbonasäure hinzugegeben werden, wenn wenig Diol entfernt wurde oder es kann Diol zugegeben werden, wenn viel Diol entfernt wurde. Es kann ebenso vorteilhaft sein, mit einem Überschuss an Diol in Verfahrensschritt (i) zu starten, um einen aktiven Ausgleich zu vermeiden.

Verbindung (A) weist mindestens zwei Estergruppen auf. Es ist aber auch möglich, dass Verbindung (A) eine Mischung aus unterschiedlichen Verbindungen ist, welche alle mindestens zwei Estergruppen aufweisen. Der Fachperson ist ersichtlich, dass, wenn die Säurezahl größer 0 mg KOH/g ist, auch Verbindungen vorhanden sein müssen, welche nur eine oder gar keine Estergruppen aufweisen. Diese werden in diesem Kontext als Verunreinigung angesehen. Wenn die Verbindung (A) mehr als zwei Estergruppen aufweist, so entsteht in der Regel ein Oligoester (d. h. ein Trimer, Tetramer oder größer). Damit kann die Verbindung (A) auch eine Mischung unterschiedlicher Oligoester sein. Bevorzugt weist dieser Oligoester eine Wiederholungszahl von 1 bis 10, besonders bevorzugt 1 bis 7 und ganz besonders bevorzugt 1 bis 5. Der Fachperson ist in der Lage, das entsprechende Molekulargewicht zu bestimmen.

Um eine Säurezahl im erfindungsgemäß definierten Bereich zu erhalten, muss die Anfangssäurezahl der Dicarbonsäure bekannt sein. Die Fachperson ist in der Lage mit Hilfe der Anfangssäurezahl die Säurezahl der Verbindung (A) zu berechnen. Dazu muss die benötigte Menge der Dicarbonsäure und des 1,4:3,6-Dianhydrohexitols und / oder Tricyclodecandimethanols bekannt sein. Die tatsächliche Säurezahl der Verbindung (A) kann am Ende der Reaktion bestimmt werden.

Wenn nach Verfahrensschritt (i) und vor Verfahrensschritt (ii) eine Aufreinigung und/oder Isolierung der Verbindung (A) stattfindet, kann sich die Zusammensetzung der Mischung an Verbindung (A) auch auf der Fachperson ersichtliche Weise ändern. Es ist insbesondere bevorzugt, dass die Verbindung (A) in Verfahrensschritt (ii) eine Säurezahl von kleiner 10 mg KOH/g, bevorzugt von kleiner 9 mg KOH/g und besonders bevorzugt kleiner 5 mg KOH/g aufweist. Auch kann die Fachperson die gewünschte OH-Zahl der Mischung berechnen auf Basis der Zusammensetzung von Diolen und Dicarbonsäuren, um eventuell eine Korrektur durchzuführen und die benötigte Menge an Reagenzien für Verfahrenschritt (ii) zu bestimmen.

### Verfahrensschritt (ii)

Im erfindungsgemäßen Verfahrensschritt (ii) reagiert die Verbindung (A) mit mindestens einem Diarylcarbonat und / oder Dialkylcarbonat zu einem Polyestercarbonat. Dabei wird bevorzugt die Verbindung (A) unmittelbar nach Durchführung des Verfahrensschritts (i) eingesetzt. Dies bedeutet, dass die Verbindung (A) keiner Isolierung aus dem Reaktionsgemisch des Verfahrensschritts (i) unterzogen wird. Ebenso ist es möglich, dass die Verbindung (A) aus dem Verfahrensschritt (ii) vom Reaktionsgemisch des Verfahrensschritts (i) isoliert wird. In diesem Fall ist es zusätzlich bevorzugt, dass die Verbindung (A) aufgereinigt wird.

In Verfahrensschritt (ii) findet zumindest eine Reaktion der OH-Gruppen der Verbindung (A) mit dem Diarylcarbonat und/oder Dialkylcarbonat statt. Diese Reaktion wird in der Regel auch als Kondensation oder Aufkondensation bezeichnet. Der Begriff "Kondensation" bzw. auch "Aufkondensation" der Fachperson bekannt. Bevorzugt wird unter einer "Kondensation" eine Reaktion verstanden, bei der sich zwei Moleküle (des gleichen Stoffes oder verschiedener Stoffe) zu einem größeren Molekül vereinigen, wobei ein Molekül einer chemisch einfachen Substanz abgespalten wird. Diese bei der Kondensation abgespaltene Verbindung wird in Verfahrensschritt (ii) bevorzugt entfernt.

Bevorzugt findet in Verfahrensschritt (ii) eine Reaktion der Verbindung (A) mit mindestens einem Diarylcarbonat statt.

Des Weiteren ist es bevorzugt, dass das Diarylcarbonat des Verfahrensschritts (ii) ausgewählt wird aus der Gruppe, bestehend aus einer Verbindung der Formel (7) 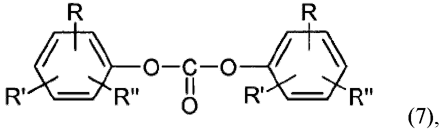 worin R, R' und R" jeweils unabhängig voneinander gleich oder verschieden sein können und für Wasserstoff, gegebenenfalls verzweigtes C₁-C₃₄-Alkyl, C₇-C₃₄-Alkylaryl, C₆-C₃₄-Aryl, eine Nitrogruppe, eine Carbonyl-enthaltende Gruppe, eine Carboxyl-enthaltende Gruppe oder eine Halogengruppe stehen.

Besonders bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat, Bis(methylsalicyl)carbonat, Bis(ethylsalicyl)carbonat, Bis(propylsalicyl)carbonat, Bis(2-benzoylphenylcarbonat), Bis(phenylslicyl)carbonat und/oder Bis(benzylsalicyl)carbonat. Insbesondere bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 -phenylethyl)-phenyl-phenyl-carbonat und/oder Di-[4-(1-methyl-1-phenylethyl)-phenyl]-carbonat. Besonders bevorzugt ist das mindestens eine Diarylcarbonat Diphenylcarbonat.

Des Weiteren ist es bevorzugt, dass in Verfahrensschritt (ii) mindestens ein Katalysator anwesend ist. Dabei handelt es sich bevorzugt um einen der zu Verfahrensschritt (i) genannten Katalysatoren oder einen basischen Katalysator. Als basischer Katalysator kommen alle anorganischen oder organischen basischen Verbindungen in Frage.

Beispiele für den basischen Katalysator Lithium-, Natrium-, Kalium-, Cäsium-, Calzium-, Barium-, Magnesium-, -hydroxide, -carbonate, -halogenide, -phenolate, -diphenolate, - fluoride, -acetate, -phosphate, -hydrogenphosphate, -boranate, Stickstoff- und Phosphorbasen wie beispielsweise Tetramethylammoniumhydroxid, Tetramethyl-ammoniumacetat, Tetramethylammonium-fluorid, Tetramethylammoniumtetraphenylboranat, Tetraphenylphosphoniumfluorid, Tetra-phenylphosphoniumtetraphenyl-boranat, Dimethyldiphenylammoniumhydoxid, Tetraethyl-ammoniumhydroxid, Cethyltrimethylammoniumtetraphenylboranat, Cethyltrimethyl-ammoniumphenolat, 1,8-Diazabicyclo[5.4.0]undec-7-en (DBU), 1,5-Diazabicyclo [4.3.0]non-5-en (DBN) oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexylidendi-1,5,7-triazabi-cyclo-[4,4,0]-dec-5-en, 7,7'-Decylidendi-1,5,7-triazabicyclo-[4,4,0]-dec-5-en, 7,7'-Dodecyliden-di-1,5,7-tri-aza-bicyclo-[4,4,0]-dec-5-en oder Phosphazene wie beispielsweise die Phosphazen-Base P1-t-Oct = tert.-Octyl-imino-tris-(dimethylamino)-phosphoran, Phosphazen-Base P1-t-Butyl = tert.-Butyl-imino-tris-(dimethylamino)-phosphoran, BEMP = 2-tert.-Butylimino-2-diethylamino-1,3-dimethyl-perhydro-1,3,2-diaza-2-phos-phoran, Insbesondere geeignet sind außerdem Phosphoniumkatalysatoren der Formel (K): 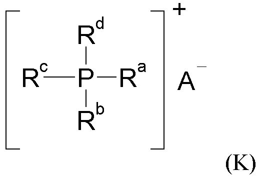 wobei R^{a}, R^{b}, R^{c} und R^{d} dieselben oder verschiedene C1-C10-Alkyle, C6-C14-Aryle, C7-C15-Arylalkyle oder C5-C6-Cycloalkyle, bevorzugt Methyl oder C6-C14-Aryle, besonders bevorzugt Methyl oder Phenyl sein können, und A⁻ ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C6-C14-Aryl, C7-C15-Arylalkyl oder C5-C6-Cycloalkyl, bevorzugt Phenyl sein kann.

Besonders bevorzugte Katalysatoren sind Tetraphenylphosphoniumchlorid, Tetraphenylphosphoniumhydroxid und Tetraphenylphosphoniumphenolat; ganz besonders bevorzugt ist Tetraphenylphosphoniumphenolat.

Diese Katalysatoren werden bevorzugt in Mengen von 10⁻² bis 10⁻⁸ Mol, bezogen auf 1 Mol aller OH-Gruppen enthaltenden Verbindungen, eingesetzt. Zusätzlich ist es bevorzugt, dass noch ein alkalisch wirkendes Salz als Cokatalysator anwesend ist. Die Mengen der alkalisch wirkenden Salze als Cokatalysator können im Bereich von 1 bis 500 ppb, vorzugsweise 5 bis 300 ppb und besonders bevorzugt 5 bis 200 ppb, eingesetzt werden.

Der Katalysator kann allein oder als Katalysatorgemisch eingesetzt werden und in Substanz oder als Lösung, beispielsweise in Wasser oder in Phenol, z.B. als Mischkristall mit Phenol, zugesetzt werden.

Ebenso können auch Katalysatoren eingesetzt werden, welche bereits zu Verfahrensschritt (i) beschrieben wurden. Besonders bevorzugt sind Organo-Zink- oder Zinn-Verbindungen. Insbesondere bevorzugt sind Dibutylzinndilaurat, Dibutylzinnoxid, Di-n-Octylzinn-oxid, Monobutylzinnoxid, Zinn(II)-ethylhexanoat und/oder Titan(IV)butoxid. Die Katalysatormengen können von 10 ppm bis 20.000 ppm oder 10 bis 10.000 ppm oder 10 bis 5000 ppm oder 10 bis 1000 ppm oder 10 bis 500 ppm oder 10 bis 300 ppm oder 10 bis 250 ppm reichen, bezogen auf das Katalysatormetall und bezogen auf das Gewicht des Produkts des Verfahrensschritts (i), welches in Verfahrensschritt (ii) eingesetzt wird.Es ist insbesondere bevorzugt, dass im erfindungsgemäßen Verfahrensschritt (ii) auf 1 Mol der Verbindung (A) und gegebenenfalls allen weiteren Diolen 0,9 bis 1,1, besonders bevorzugt 0,95 bis 1,05 Mole des Diarylcarbonats eingesetzt werden.

Erfindungsgemäß ist es insbesondere bevorzugt, dass in Verfahrensschritt (ii) zusätzlich mindestens ein Diol anwesend ist. Dieses Diol kann entweder ein 1,4:3,6-Dianhydrohexitol und / oder Tricyclodecandimethanol oder ein anderes Diol sein. Wenn dieses Diol 1,4:3,6-Dianhydrohexitol und / oder Tricyclodecandimethanol ist, kann es auch noch mit Verbindung (A) dem Verfahrensschritt (ii) zugeführt werden. Insbesondere kann es sich dabei auch um in Verfahrensschritt (i) nicht reagiertes 1,4:3,6-Dianhydrohexitol und / oder Tricyclodecandimethanol handeln.

Bevorzugt ist das erfindungsgemäße Verfahren dadurch gekennzeichnet, dass das mindestens eine zusätzliche Diol aliphatisch oder cycloaliphatisch ist. Insbesondere bevorzugt ist das erfindungsgemäße Verfahren dadurch gekennzeichnet, dass das mindestens eine zusätzliche Diol ausgewählt ist aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, 2,2-bis(4-Hydroxycyclohexyl)propan, Tetrahydro-2,5-furandimethanol, 2,2,4,4-Tetramethyl-1,3-cyclobutandiol, Cyclobutan-1,1-diyldimethanol, und 8-(Hydroxymethyl)-3-tricyclo[5.2.1.02,6]decanyl]methanol, 2-Butyl-2-ethyl-1,3-propandiol, 2-(2-Hydroxyethoxy)ethanol, 2,2,4-Trimethyl-1,3-pentandiol, 2,2-Dimethylpropan-1,3-diol, 1,2-Propandiol, 1,3-Propandiol, 1,4-Butandiol, 1,5-Pentandiol, 1,6-Hexandiol, 1,8-Octandiol, 1,4:3,6-Dianhydrohexitol und einer Verbindung der Formel (4),

HO-(CH₂)ᵣ-R³-(CH₂)ₛ-OH (4),

wobei jedes r und jedes s unabhängig voneinander für eine Zahl zwischen 0 und 4 steht und jedes R³ unabhängig voneinander für eine Struktur der Formeln (R3A), (R3B), (R3C) und (R3D) steht 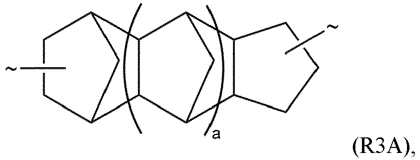 wobei a 0 oder 1 ist, 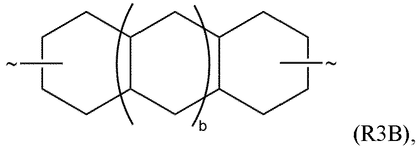 wobei b 0 oder 1 ist, 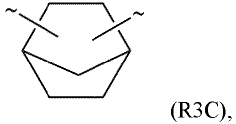 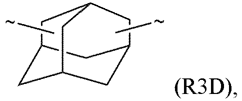 wobei die mit "~" gekennzeichneten Positionen in den Formeln (R3A) bis (R3D) die Positionen sind, an denen sich die in Formel (4) gezeigte (CH₂)ᵣ-Gruppe beziehungsweise (CH₂)ₛ-Gruppe befindet.

Ganz besonders bevorzugt ist das mindestens eine zusätzliche Diol ausgewählt aus der Gruppe, bestehend aus 1,4:3,6-Dianhydrohexitol und einer Verbindung der Formel (4), wobei in Formel (4) jedes r und jedes s unabhängig voneinander für eine Zahl zwischen 0 und 2, ganz besonders bevorzugt für 0 oder 1, jedes R³ unabhängig voneinander für eine Struktur der Formeln (R3A) steht und a 0 oder 1 ist.

Des Weiteren ist es erfindungsgemäß auch nicht ausgeschlossen, dass aromatische Diole in Verfahrensschritt (ii) vorhanden sind. Diese sind bevorzugt jedoch nur zu geringen Anteilen vorhanden. Besonders bevorzugt sind in Verfahrensschritt (ii) zusätzlich bis zu 20 mol-%, weiterhin bevorzugt bis zu 10 mol-% und ganz besonders bevorzugt bis zu 5 mol-% einer aromatischen Diol-Verbindung in Bezug auf die gesamte Stoffmenge der eingesetzten Diol-Verbindung vorhanden (die schließt auch die in Verfahrensschritt (i) vorhandenen Diole ein). In diesen Fällen wird erfindungsgemäß bevorzugt immer noch von einem aliphatischen Polyestercarbonat gesprochen. Besonders bevorzugt wird jedoch keine aromatische Diol-Verbindung in Verfahrensschritt (ii) eingesetzt. In der Regel setzen aromatische Verbindungen in Polyestercarbonaten deren UV-Stabilität und Witterungsbeständigkeit herunter. Dies ist insbesondere für Außenanwendungen nachteilig. Zudem senken aromatische Anteile in einem Polyestercarbont die Oberflächenhärte von daraus hergestellten Formkörpern, was ggf. zur Notwendigkeit von Lackierung führt.

Diese zusätzlichen aromatischen Diol-Verbindungen werden bevorzugt ausgewählt aus der Gruppe, bestehend aus Bisphenol A, 1,1-Bis-(4-hydroxyphenyl)-3,3,5-trimethylcyclohexan, 4,4'-Dihydroxybiphenyl (DOD), 4,4'-Dihydroxybiphenylether (DOD-Ether), Bisphenol B, Bisphenol M, den Bisphenolen (I) bis (III) 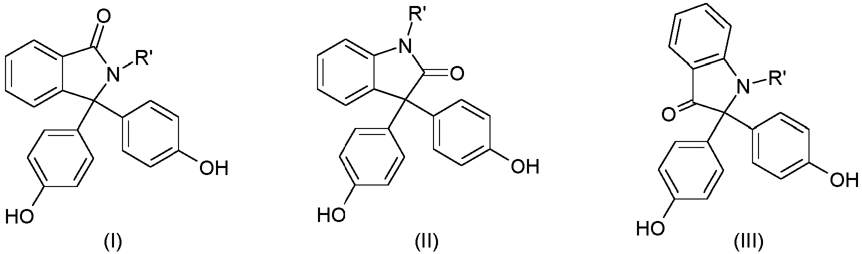 wobei in diesen Formeln (I) bis (III) R' jeweils für C1-C4-Alkyl, Aralkyl oder Aryl, bevorzugt für Methyl oder Phenyl, ganz besonders bevorzugt für Methyl, steht.

Durch den Einsatz eines zusätzlichen Diols in Verfahrensschritt (ii) kann gesteuert werden, dass das resultierende Polyestercarbonat amorph ist und / oder bleibt. Zudem kann die Glasübergangstemperatur durch dieses zusätzliche Diol beeinflusst werden. Das erfindungsgemäße Polyestercarbonat bzw. das, welches durch das erfindungsgemäße Verfahren erhalten wird, hat eine Glasübergangstemperatur von mindestens 90 °C. Besonders bevorzugt, weist das Polyestercarbonat eine Glasübergangstemperatur von mindestens 95 °C, besonders bevorzugt von mindestens 100 °C und ganz besonders bevorzugt mindestens 110 °C auf. Dabei kann die Glasübergangstemperatur (Tg) bevorzugt mittels dynamischer Differenzkalorimetrie (DSC) gemäß der Norm DIN EN ISO 11357-1:2009-10 und ISO 11357-2:2013-05 bestimmt werden. Es wird insbesondere eine Heizrate von 20 K/min unter Stickstoff verwendet und die Tg wird als Wendepunkt im zweiten Aufheizvorgang bestimmt. Eine Glasübergangstemperatur im definierten Bereich ermöglicht, dass das erfindungsgemäße Polyestercarbonat in gängigen Plastifizierverfahren (z. B. Spritzguss, (Co)Extrusion, Blasformverfahren, Tiefziehen) eingesetzt werden kann.

Der Fachperson ist ersichtlich, wie die Einsatzstoffe, insbesondere die Dicarbonsäure, das Diarylcarbonat, das 1,4:3,6-Dianhydrohexitol und/ oder das Tricyclodecandimethanol (und gegebenenfalls weitere Diole) in den Verfahrensschritten (i) und (ii) eingesetzt werden, um ein Polyestercarbonat der gewünschten Zusammensetzung zu erhalten. Insbesondere ist es bevorzugt, dass im erfindungsgemäßen Verfahren 8 mol-% bis 40 mol-% mindestens einer Dicarbonsäure, insbesondere bevorzugt 15 bis 35 mol-% mindestens einer Dicarbonsäure bezogen auf die Gesamtstoffmenge der Dicarbonsäure, gegebenenfalls zusätzlichen Diolen und dem 1,4:3,6-Dianhydrohexitol und / oder Tricyclodecandimethanol eingesetzt werden.

Ebenso ist es bevorzugt, dass im erfindungsgemäßen Verfahren 2 bis 14 mol-%, besonders bevorzugt 3 bis 12 mol-%, ganz besonders bevorzugt 3,5 bis 7,5 mol-% mindestens einer Dicarbonsäure, besonders bevorzugt Dimerfettsäure eingesetzt werden, bezogen auf die Gesamtstoffmenge an eingesetzten Dicarbonsäuren, gegebenenfalls zusätzlichen Diolen und 1,4:3,6-Dianhydrohexitol und / oder Tricyclodecandimethanol. Hier ist es insbesondere bevorzugt, dass in Verfahrensschritt (i) ein 1,4:3,6-Dianhydrohexitol eingesetzt wird (und kein Tricyclodecandimethanol). Des Weiteren ist es dann bevorzugt, dass in Verfahrensschritt (ii) 4 bis 25 mol-%, besonders bevorzugt 5 bis 20 mol-%, ebenso bevorzugt 7 bis 18 mol-% und ganz besonders bevorzugt 10 bis 15 mol-%, ganz besonders bevorzugt 5 bis 10 mol-% oder ebenso ganz besonders bevorzugt 8 bis 12 mol-% mindestens eines weiteren Diols, besonders bevorzugt Tricyclodecandimethanol eingesetzt werden, bezogen auf die Gesamtstoffmenge an eingesetzten Dicarbonsäuren, gegebenenfalls weiteren Diolen und 1,4:3,6-Dianhydrohexitol und Tricyclodecandimethanol. Des Weiteren ist es bevorzugt, dass mindestens 55 mol-%, besonders bevorzugt mindestens 65 mol-%, ebenso bevorzugt mindestens 75 mol-% und ganz besonders bevorzugt mindestens 80 mol-% des 1,4:3,6-Dianhydrohexitols, besonders bevorzugt Isosorbid eingesetzt werden, bezogen auf die Gesamtstoffmenge an eingesetzten Dicarbonsäuren, gegebenenfalls weiteren Diolen und 1,4:3,6-Dianhydrohexitol und / oder Tricyclodecandimethanol. Der Einsatz von Dimerfettsäure, 1,4:3,6-Dianhydrohexitol und Tricyclodecandimethanol insbesondere in den angegebenen Mengen hat den Vorteil, dass ein Polyestercarbonat entsteht, welches eine gute Stabilität gegen Wasser, bevorzugt Heißwasserstabilität, sowie eine gute Fettbeständigkeit, als auch eine gute Beständigkeit gegenüber Lipidlösungen und organischen Lösungsmitteln bei guter Verarbeitbarkeit und guter UV- bzw. Witterungsstabilität aufweist.

Bevorzugt weist das nach dem erfindungsgemäßen Verfahren erhaltene Polyestercarbonat eine relative Lösungsviskosität oberhalb von 1,20 auf, besonders bevorzugt von 1,21 bis 1,65, weiter bevorzugt von 1,22 bis 1,63, insbesondere bevorzugt von 1,23 bis 1,62, ganz besonders bevorzugt von 1,26 bis 1,55. Gemäß der vorliegenden Erfindung wird die relative Lösungsviskosität (ηrel; auch als eta rel bezeichnet) bevorzugt in Dichlormethan bei einer Konzentration von 5 g/l bei 25 °C mit einem Ubbelohde-Viskosimeter bestimmt. Der Fachperson ist die Bestimmung der relativen Lösungsviskosität mittels Ubbelohde-Viskosimeter bekannt. Erfindungsgemäß wird diese bevorzugt gemäß DIN 51562-3; 1985-05 durchgeführt. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Es ist bevorzugt, dass die bei der Kondensation abgespaltene(n) chemische(n) Verbindung(en) in Verfahrensschritt (ii) mittels Vakuum entfernt werden. Demgemäß ist es bevorzugt, dass das erfindungsgemäße Verfahren dadurch gekennzeichnet ist, dass die bei der Kondensation abgespaltene(n) chemische(n) Verbindung(en) in Verfahrensschritt (ii) unter schrittweiser Reduzierung des Drucks abgetrennt werden. Eine schrittweise Abtrennung wird dabei bevorzugt gewählt, wenn unterschiedliche flüchtige Bestandteile abgetrennt werden. Ebenso bevorzugt wird eine schrittweise Abtrennung gewählt, um eine möglichst vollständige Abtrennung des oder der flüchtigen Bestandteils/e zu gewährleisten. Bei den flüchtigen Bestandteilen handelt es sich um die bei der Kondensation abgespaltenen chemischen Verbindung bzw. Verbindungen. Dies ist insbesondere der gebildete Arylalkohol, besonders bevorzugt Phenol.

Eine schrittweise Absenkung des Drucks kann z.B. derart erfolgen, dass, sobald die Kopftemperatur fällt, der Druck gesenkt wird, um eine kontinuierliche Entfernung der bei der Kondensation abgespaltenen chemischen Verbindung zu gewährleisten. Wenn ein Druck von 1 mbar, bevorzugt <1mbar erreicht ist, wird weiterhin kondensiert, bis die gewünschte Viskosität erreicht ist. Dies kann z.B. durch Drehmomentkontrolle erfolgen d.h. die Polykondensation wird bei Erreichen des gewünschten Drehmoments des Rührers abgebrochen.

Die Abtrennung des Kondensationsproduktes in Verfahrensschritt (ii) erfolgt bevorzugt bei Temperaturen von 180 °C bis 320 °C, bevorzugt 190 °C bis 280 °C, besonders bevorzugt 195 °C bis 260 °C und insbesondere bevorzugt 200 °C bis 250 °C. Weiterhin bevorzugt beträgt das Vakuum bei der Abtrennung 500 mbar bis 0,01 mbar. Insbesondere ist es bevorzugt, dass die Abtrennung schrittweise durch Reduktion des Vakuums erfolgt. Ganz besonders bevorzugt beträgt das Vakuum in der letzten Stufe 10 mbar bis 0,01 mbar.

Verfahrensschritt (ii) kann batchweise oder kontinuierlich durchgeführt werden. Bevorzugt wird Verfahrensschritt (ii) kontinuierlich durchgeführt. Im Verlauf des Verfahrensschritts (ii) kommt es zu einer Viskositätssteigerung. Ab einer gewissen Viskosität / Molekulargewicht ist die Kondensation in einem Rührkessel gegebenenfalls nicht mehr effizient, da die Oberflächenerneuerung abnimmt und die Entfernung der niedermolekularen Kondensationsprodukte (insbesondere Phenol) erschwert ist. Deshalb ist es insbesondere sinnvoll Verfahrensschritt (ii) in einem Prozessaggregat wie einem Hochviskosreaktor, Scheiben- oder Gitterreaktor, Extruder oder Dünnschichtverdampfer durchzuführen. Es ist aber auch möglich, Verfahrensschritt (ii) in einem Rührkessel, gegebenenfalls auch dem gleichen Rührkessel wie in Verfahrensschritt (i), durchzuführen, wenn dieser entsprechend geeignete Rührwerkzeuge aufweist.

In einem weiteren Aspekt der vorliegenden Erfindung wird eine Verbindung der Formel (5) bereitgestellt, 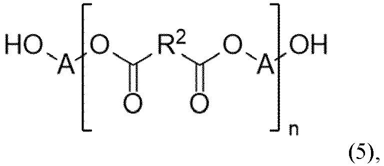
wobei in der Formel (5) jedes A jeweils unabhängig voneinander für die Formel (5a) oder (5b) steht, 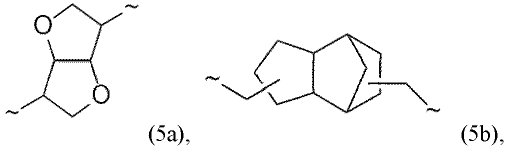
wobei die wobei die mit "~" gekennzeichneten Positionen in der Formeln (5a) und (5b) die Positionen sind, an denen sich jeweils die in Formel (5) gezeigten Sauerstoffatome befinden, welche an A angrenzen,
jedes R² unabhängig voneinander für eine aliphatische Gruppe mit 16 bis 44 Kohlenstoffatomen steht, welche gegebenenfalls ein oder mehrere Doppelbindungen enthält und
n für eine Zahl von 1 bis 10, bevorzugt 1 bis 7, besonders bevorzugt 1 bis 5 steht.

Die Verbindung der Formel (5) ist eine der möglichen Verbindungen (A), welche durch den erfindungsgemäßen Verfahrensschritt (i) entstehen können. Bevorzugt wird die Verbindung der Formel (5) durch das erfindungsgemäße Verfahren, besonders bevorzugt durch die bevorzugten Ausführungsformen des erfindungsgemäßen Verfahrens ggf. auch in sämtlichen Kombinationen der bevorzugten Ausführungsformen, erhalten.

Die erfindungsgemäße Verbindung der Formel (5) hat insbesondere den Vorteil, dass sie OH-terminiert ist. Dies bedeutet, dass sie in einem Verfahren zur Herstellung eines Polyestercarbonats eingesetzt werden kann wie ein klassisches Diol. Die Reaktivität der Verbindung der Formel (5) in einer Polykondensation mit einem Diarylcarbonat und/oder Dialkylcarbonat ist vergleichbar mit anderen Diolen. Dadurch lässt sich der Einbau der Verbindung der Formel (5) in ein Polyestercarbonat gut steuern. Gleichzeitig werden durch die Verbindung der Formel (5) aber auch Estergruppen in das Polyestercarbonat eingebaut. Hier kann somit die gegebenenfalls andere Reaktivität von Komponenten, welche in das Polyestercarbonat eingebaut werden sollen, durch die Verwendung der Verbindung der Formel (5) ausgeglichen werden.

Besonders bevorzugt wird R² in der Formel (5) dargestellt durch die folgende Formel (R2A) 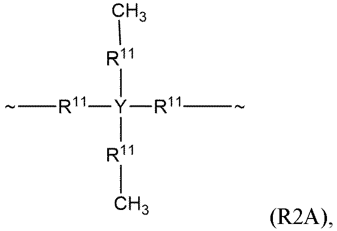
wobei Y für eine verbrückende Struktur steht, die ausgewählt wird aus der Gruppe, bestehend aus einer Alkylen-Gruppe mit 1 bis 4 Kohlenstoffatomen, einer Alkyliden-Gruppe mit 1 bis 4 Kohlenstoffatomen und einer Cycloalkylen-Gruppe mit 4 bis 12 Kohlenstoffatomen, wobei die Cycloalkylen-Gruppe gegebenenfalls eine oder mehrere Doppelbindungen enthält und/oder gegebenenfalls an eine oder mehrere weitere Cycloalkylen-Gruppen kondensiert ist, wobei die eine oder mehreren weiteren Cycloalkylengruppen gegebenenfalls jeweils eine oder mehrere Doppelbindungen aufweisen,
wobei die an die verbrückende Struktur angrenzenden R¹¹-Gruppen an eine beliebige Position der verbrückenden Struktur gebunden sind und
wobei jedes R¹¹ unabhängig voneinander für eine Alkylen-Gruppe mit 1 bis 12 Kohlenstoffatomen oder eine Alkyliden-Gruppe mit 1 bis 12 Kohlenstoffatomen steht, mit der Maßgabe dass die Struktur der Formel (R2A) 16 bis 44 Kohlenstoffatome umfasst und wobei die mit "~" gekennzeichneten Positionen in der Formel (R2A) die Positionen sind, an denen sich jeweils die in Formel (5) gezeigten (C=O)-Gruppen befinden, welche an R² angrenzen.

Besonders bevorzugt wird die Formel (R2A) dargestellt durch eine der oben gezeigten Formeln (R2Aa), (R2Ab), (R2Ac) oder (R2Ad). Besonders bevorzugt steht jedes R¹¹ in der Formel (R2A) und/oder in den Formeln (R2Aa), (R2Ab), (R2Ac) oder (R2Ad) unabhängig voneinander für eine Alkylen-Gruppe mit 1 bis 10 Kohlenstoffatomen, mit der Maßgabe dass die Struktur der Formel (R2A) und/oder in den Formeln (R2Aa), (R2Ab), (R2Ac) oder (R2Ad) 16 bis 44 Kohlenstoffatome umfasst. Besonders bevorzugt gelten die für Formel (3) oben beschriebenen Bevorzugungen der Gruppe R² bzw. R¹¹ und/ oder Y.

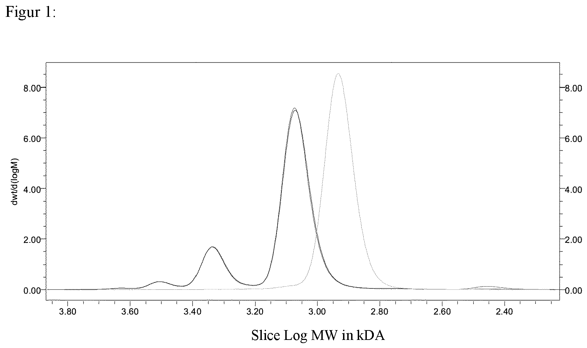

Die Fachperson kann das arithmetische Mittel an Wiederholungseinheiten n durch bekannte Verfahren bestimmen. Insbesondere kann n durch Gelpermeationschromatographie bestimmt werden. Besonders bevorzugt wird n mittels Gelpermeationschromatographie in Tetrahydrofuran mit einem Polystyrol als Standard. Hierbei werden unterschiedliche Peaks erhalten, welche anhand des Molekulargewichts entsprechenden Oligomeren zugeordnet werden können. Sofern die Peaks nicht eindeutig aufgetrennt vorliegen (insbesondere bei längerkettigen Oligomeren) kann die Unterteilung der Peaks bevorzugt im Tiefpunkt zwischen zwei Peaks gesetzt werden. Wenn kein Tiefpunkt mehr gemessen wird, wird das Tailing des Peaks bevorzugt weiterhin zu der entsprechenden Wiederholungseinheit des Maximums gezählt. Figur 1 zeigt ein Beispiel Chromatogramm einer Verbindung der Formel (5), wobei A für die Formel (5a) steht und R² von Dimerfettsäure abgeleitet ist. Wie dieses Chromatogramm zeigt, können hier Verbindungen unterschieden werden, bei denen n = 1, n = 2 und n = 3 ist.

In einem weiteren Aspekt der vorliegenden Erfindung wird ein Polyestercarbonat bereitgestellt, umfassend die Struktureinheit der der Formel (6) 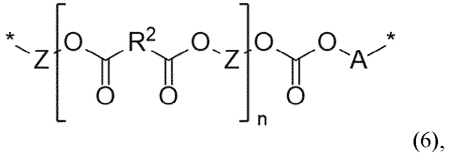
wobei in der Formel (6)
Z entweder immer für die Formel (5a) oder immer für die Formel (5b) steht, jedes A jeweils unabhängig voneinander für die Formel (5a) oder (5b) steht, 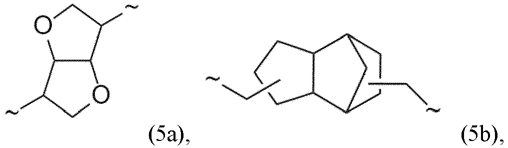
wobei die wobei die mit "~" gekennzeichneten Positionen in der Formeln (5a) und (5b) die Positionen sind, an denen sich jeweils die in Formel (6) gezeigten Sauerstoffatome befinden, welche an A oder Z angrenzen,
die mit "*" gekennzeichneten Positionen in der Formel (6) die Positionen sind, mit denen die Formel (6) in das Polyestercarbonat eingebunden ist,
jedes R² unabhängig voneinander für eine aliphatische Gruppe mit 16 bis 44 Kohlenstoffatomen steht, welche gegebenenfalls ein oder mehrere Doppelbindungen enthält und
n für eine Zahl von 2 bis 10, bevorzugt 2 bis 7, besonders bevorzugt 2 bis 5 steht.

Der Fachperson ist der Zusammenhang zwischen dem erfindungsgemäßen Polyestercarbonat und dem erfindungsgemäßen Verfahren verständlich. Bevorzugt wird das Polyestercarbonat der Formel (6) durch das erfindungsgemäße Verfahren, besonders bevorzugt durch die bevorzugten Ausführungsformen des erfindungsgemäßen Verfahrens ggf. auch in sämtlichen Kombinationen der bevorzugten Ausführungsformen, erhalten.

Bevorzugt gelten die oben beschriebenen Bevorzugungen oder auch Kombinationen an Bevorzugungen für R².

Das erfindungsgemäße Polyestercarbonat weist bevorzugt eine relative Lösungsviskosität oberhalb von 1,20 auf, besonders bevorzugt von 1,21 bis 1,65, weiter bevorzugt von 1,22 bis 1,63, insbesondere bevorzugt von 1,23 bis 1,62, ganz besonders bevorzugt von 1,26 bis 1,55. Bevorzugt wird die relative Lösungsviskosität, wie oben beschrieben, bestimmt.

Die Anzahl der Wiederholungseinheiten n ist für die Fachperson bestimmbar. Dazu wird n durch die Synthese der Verbindung (A) zunächst festgelegt. An einer Verbindung (A) kann n beispielsweise per GPC bestimmt werden. Auch in den ¹³C- und/oder ¹H-NMR Spektren sind die Peaks zu den unterschiedlichen Bindungen zuordbar. Ein Polyestercarbonat, umfassend die Formel (6) weist durch n = mindestens 2 immer eine Formel (5a) oder Formel (5b) auf, welche von zwei C-Atomen einer Esterbindung umgeben ist. Ebenso weist sie zwei charakteristische CH bzw. CH₂-Gruppen neben den Estergruppen auf, welche im ¹H-NMR sichtbar sind. Diese weisen eine andere chemische Verschiebung auf als eine Verbindung der Formel (5a) oder Formel (5b), welche an eine Carbonatgruppe gebunden ist. Durch den Vergleich der Spektren der Verbindung (A) und des Polyestercarbonats sind zuminedst diese Gruppe nachweisbar. Die Bestimmung des n kann beispielweise durch MALDI-Tof-Massenspektroskopie unterstütz werden.

Besonders bevorzugt weist das erfindungsgemäße Polyestercarbonat des Weiteren Strukturen der Formel (8) auf, wobei 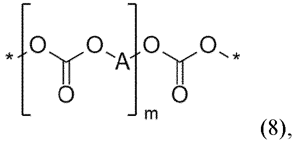 wobei A die zu Formel (6) genannten Bedeutungen hat, die mit "*" gekennzeichneten Positionen in der Formel (6) die Positionen sind, mit denen die Formel (6) in das Polyestercarbonat eingebunden ist, und m für die mittlere Anzahl an Wiederholungseinheiten steht.

Bevorzugt ist m 2 bis 500, besonders bevorzugt 3 bis 300, ganz besonders bevorzugt 3 bis 200. Die Fachperson kann dieses m auf ihr bekannte Weise beispielsweise durch NMR und / oder GPC bestimmen.

Besonders bevorzugt ist das erfindungsgemäße Polyestercarbonat dadurch gekennzeichnet, dass es zu mindestens 80 Gew.-%, besonders bevorzugt mindestens 85 Gew.-%, ebenso bevorzugt zu mindestens 90 Gew.-% aus Strukturen der Formel (6) und / oder (8) besteht.

Insbesondere, wenn das erfindungsgemäße Polyestercarbonat durch das erfindungsgemäße Verfahren erhalten wird, weist es eine spezielle Struktur auf, da es sequentiell hergestellt wurde. Somit umfasst das Polyestercarbonat spezielle gezielte und gesteuerte Verbindungen der Monomere über Estergruppen und ebenso gezielt gesteuerte Verbindungen über Carbonatgruppen. Dadurch kann das Eigenschaftsprofil der erfindungsgemäßen Polyestercarbonate gezielt beeinflusst werden. Dabei ist es insbesondere bevorzugt, dass das erfindungsgemäße Polyestercarbonat und/oder das nach dem erfindungsgemäßen Verfahren erhaltene Polyestercarbonat zu mindestens 50 mol-%, besonders bevorzugt zu mindestens 70 mol-% und ganz besonders bevorzugt zu mindestens 75 mol-% biobasiert ist. Im Sinne der vorliegenden Erfindung wird unter dem Ausdruck "biobasiert" verstanden, dass die betreffende chemische Verbindung zum Anmeldezeitpunkt durch einen erneuerbaren und/oder nachwachsenden Rohstoff zugänglich, erhältlich und/oder bevorzugt ein solcher erneuerbarer und/oder nachwachsender Rohstoff ist. Unter einem erneuerbaren und/oder nachwachsenden Rohstoff wird bevorzugt ein Rohstoff verstanden, welcher durch natürliche Prozesse mit einer Geschwindigkeit regeneriert wird, die mit ihrer Abbaurate vergleichbar ist (Siehe CEN/TS 16295:2012). Der Ausdruck dient insbesondere der Abgrenzung zu Rohstoffen aus fossilen Rohstoffen, auch als petrobasiert bezeichnet. Ob ein Rohstoff biobasiert ist oder petrobasiert, kann durch die Messung von Kohlenstoffisotopen in dem Rohstoff festgestellt werden, da die relativen Mengen des Kohlenstoffisotops C¹⁴ geringer sind in fossilen Rohstoffen. Dies kann beispielsweise gemäß der ASTM D6866-18 (2018) oder der ISO16620-1 bis -5 (2015) oder der DIN SPEC 91236 2011-07 erfolgen. Erfindungsgemäß wird der Begriff "biobasiert" bevorzugt für solche Verbindungen verwendet, welche einen C¹⁴ Isotopengehalt von über 0,1 x 10⁻¹², besonders bevorzugt von über 0,2 x 10⁻¹², und ganz besonders bevorzugt von über 0,3 x 10⁻¹²aufweisen. Insbesondere sind Isosorbid und auch Dimerfettsäure biobasiert.

Zudem weist das erfindungsgemäße Polyestercarbonate eine gute Stabilität gegen Wasser, bevorzugt Heißwasserstabilität, sowie eine gute Fettbeständigkeit, als auch eine gute Beständigkeit gegenüber Lipidlösungen und organischen Lösungsmitteln bei guter Verarbeitbarkeit und guter UV- bzw. Witterungsstabilität auf.

Des Weiteren ist es vorteilhaft, das erfindungsgemäße Polyestercarbonat über das erfindungsgemäße Verfahren herzustellen, da die Kohlenstoffbilanz besonders günstig ist.

Beispielhaft wird im Folgenden die Kohlenstoffbilanz eines Polyestercarbonats des Stand der Technik mit der des Polyestercarbonats der vorliegenden Erfindung (bzw. erhalten nach dem erfindungsgemäßen Verfahren) verglichen. Dabei wird davon ausgegangen, dass das Polyestercarbonat aus 85,5 mol-% Isosorbid, 4,5 mol-% Dimerfettsäure und 10 mol-% Tricyclodecandimethanol hergestellt wird. Es ist unerheblich, ob zunächst die Dimerfettsäure mit Isosorbid und / oder Tricyclodecandimethanol verestert wird und dann das jeweilige andere Diol zugegeben wird oder in Verfahrensschritt (ii) eine Mischung aus Isosorbid und Tricyclodecandimethanol zugegeben wird. Zur besseren Vergleichbarkeit wird es im Folgenden zunächst mit Isosorbid umgesetzt.

Wird zunächst ein Dimerfettsäurediphenylesters (DFA-DP) durch Reaktion von Dimerfettsäure (DFA) mit Diphenylcarbonat (DPC) nach der folgenden Reaktion hergestellt:

DFA + 2 DPC → DFA-DP + 2 Phenol + 2 CO₂

So entstehen 0,02 kg CO₂ pro kg Polyestercarbonat. Der DFA-DP wird im Anschluss mit DPC und weiteren Diolen zu einem Polyestercarbonat umgesetzt. Hierbei wird Phenol freigesetzt.

Im erfindungsgemäßen Verfahren würde zunächst ein Dimerfettsäureoligoester (DFA-Oligoester) aus der Reaktion von Isosorbid (ISB) und DFA gemäß der folgenden Reaktion entstehen:

DFA +2 ISB → DFA-Oligoester + 2 H₂O

Der DFA-Oligoester wird erfindungsgemäß in einem weiteren Verfahrensschritt mit beispielsweise DPC zu einem Polyestercarbonat umgesetzt (in diesem Beispiel in Anwesenheit von TCD). Hierbei wird Phenol freigesetzt.

Damit kann durch das erfindungsgemäße Verfahren in dem oben genannten konkreten Beispiel 0,02 kg CO₂ pro 1 kg Polyestercarbonat eingespart werden bei einer vollständigen Veresterung der DFA mit ISB. Abhängig von den Ausgangsmaterialien und der erreichten Säurezahl bei Verfahrensschritt (i) lässt sich mehr als 90-95% dieser 0,02 kg CO₂ pro 1 kg Polyestercarbonat einsparen, neben dem Phenol.

In einem weiteren Aspekt der vorliegenden Erfindung wird eine Formmasse bereitgestellt. Enthaltend das erfindungsgemäße Polyestercarbonat. Ebenso wird erfindungsgemäß ein Formkörper bereitgestellt, enthaltend das erfindungsgemäße Polyestercarbonat. Die erfindungsgemäßen Formkörper können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

### Kurze Beschreibung der Figuren:

Figur 1: GPC Spektrum einer Verbindung (5) mit A = Formel (5a) und R² ist abgeleitet von Dimerfettsäure (dunklere Linie) und GPC Spektrum von Dimerfettsäure (unreagiert) (hellere Linie). Bei dem Peak bei ca. 2,45 kDa handelt es sich ISB. Das GPC wurde über GPC-Methode I aufgenommen.
Figur 2: ¹H-NMR Spektrum der Verbindung (A) des Beispiels 2

### Beispiele

### Säurezahl (SZ):

Die Säurezahl wurde titrimetrisch gemessen nach ISO 2114:2000 und wird als Masse von Kaliumhydroxid (KOH) in Milligramm angegeben, die benötigt wird, um ein Gramm der Testsubstanz zu neutralisieren. Sie gibt somit die Konzentration der anwesenden CarboxylGruppen an.

### Hydroxylzahl (OHZ):

Die OHZ wurde titrimetrisch gemessen in Tetrahydrofuran als Lösungsmittel nach ISO 4629-2:2016 [katalysierte Version mit Tetrahydrofuran anstatt N-Methyl2-Pyrrolidone (NMP)]. Die OHZ wird als Masse von Kaliumhydroxid (KOH) in Milligramm angegeben, die benötigt wird, um ein Gramm der Testsubstanz zu neutralisieren. Sie gibt die Konzentration von anwesenden Hydroxylgruppen an.

### Gelpermeationschromatographie I:

Das zahlenmittlere Molekulargewicht (Mn) und das gewichtsmittlere Molekulargewicht (Mw) der Verbindung (A) wurden mittels Größenausschlusschromatographie (Size Exclusion Chromatography, SEC) gemessen, kalibriert mit einer Reihe von Polystyrol-Standards mit einem Molekulargewichtsbereich von 500 bis 7 x 10⁶ g/mol. Als Eluent wurde stabilisiertes Tetrahydrofuran [THF mit 0,007-0,015% w/w Butyl-hydroxytoluol (BHT)], modifiziert mit 0,8% Essigsäure, bei einer Flussrate von 1 mL/min bei 40°C verwendet. Konkret wurden 50 mg einer festen Probe in 5 mL Eluent für 16 Stunden bei Raumtemperatur ohne Schütteln gelöst.

Anschließend wurde die so hergestellte Lösung durch einen VWR Spritzfilter [Europäische Artikelnummer 514-0071; PTFE (Polytetrafluorethylen) Spritzfilter von 25 mm und 0,45 µm Porengröße] von VWR International, LLC filtriert. 10 µL der nach der Filtration so hergestellten Lösung wurden zur Messung in das System injiziert. Die GPC-Messungen wurden auf einem Waters Acquity APC System durchgeführt, das aus folgenden Komponenten bestand:
1. einem Waters Acquity UPLC RI Brechungsindexdetektor bei 40°C
2. einem Waters Acquity APC Column Manager - S mit drei verschiedenen Acquity APC Säulen (450Ä, 125Ä und 45Å Porengröße) mit I/d = 150/4,6 mm, gefüllt mit Partikeln mit einer Partikelgröße von 2,5 (die 450Ä und 125Ä Säule) oder 1,7 µm (die 45Ä Säule) (1 µm = 1x10-6 m), (geliefert von Waters)
3. einem Acquity APC Sample Manager - pFTN Injektionssystem
4. einer Acquity APC p-Isocratic Solvent Manager isokratischen Pumpe

Das Mn und Mw wurden mit der Empower 3 Software von Waters bestimmt.

Die Anzahl an Wiederholungseinheiten (n in Formel (5)) wurde bestimmt, indem im GPC unterschiedliche Peaks erhalten wurden, welche anhand des Molekulargewichts entsprechenden Oligomeren zugeordnet werden können.

### Gelpermeationschromatographie II:

Das zahlenmittlere Molekulargewicht (Mn) und das gewichtsmittlere Molekulargewicht (Mw) der Copoly(ester)carbonate wurden mittels Größenausschlusschromatographie (Size Exclusion Chromatography, SEC) gemessen. Es wurde eine Systemkalibrierung (Universalkalibrierung) mit einem engverteilten PS Standard verwendet: zertifiziertes Mp (87200 g/mol) und experimentell bestimmte intrinsische Viskosität (IV) und Brechungsindexinkrement (dn/dc) in Dichlormethan durch einen ISO 9001 zertifizierten Lieferanten (unter Verwendung einer GPC Analyse mit Viskositätskopplung). Als Eluent wurde Dichlormethan (HPLC grade) bei einer Flussrate von 1 mL/min bei 30°C verwendet. Konkret wurden 50 mg der Probe in 50 mL Eluent gelöst.

Anschließend wurden 100 µl der so hergestellten Lösung wurden zur Messung in das System injiziert. Die GPC-Messungen wurden auf einem Agilent 1260 Infinity II system (30°C) durchgeführt, das aus folgenden Komponenten bestand:
1. G7110B Agilent 1260 Isokratische Pumpe
2. G7122A Agilent 1260 Entgaser
3. G7129A Agilent 1260 Probensampler
4. G7116A Agilent Multicolumn Thermostat MCT mit zwei Agilent Resipore (300 x 7.5 mm) Säulen
5. G7114A Agilent 1260 variabler Wellenlängen Detektor
6. G7800A Agilent 1260 GPC/SEC Multi Detector Suite mit Brechungsindexdetektor , Viskositätsdetektor and Zweiwinkellichtstreuungsdetektor.

Das Mw wurde mit der Agilent GPC/SEC Software bestimmt. Der Brechungsindexdetektor wurde als Konzentrationsdetektor verwendet.

### Bestimmung der Tg (Glasübergangstemperatur):

Die Glastemperatur wurde mittels dynamischer Differenzkalorimetrie (DSC) gemäß der Norm DIN EN ISO 11357-1:2009-10 und ISO 11357-2:2013-05 bei einer Heizrate von 20 K/min unter Stickstoff mit Bestimmung der Glastemperatur (Tg) gemessen als Wendepunkt im zweiten Aufheizvorgang bestimmt.

### Lösungsviskosität:

Die relative Lösungsviskosität (ηrel; auch als eta rel bezeichnet) wurde in Dichlormethan bei einer Konzentration von 5 g/l bei 25 °C mit einem Ubbelohde-Viskosimeter bestimmt. Die Bestimmung erfolgte nach DIN 51562-3; 1985-05. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

### ¹H-NMR-Spektroskopie:

Die Spektren wurden mit einem Bruker AV III HD 600 NMR Spektrometer in CDCl₃ bei einer Messfrequenz von 600,4 MHz gemessen.

### Verwendete Materialien:

Cyclohexandicarbonsäure: 1,4-Cyclohexandicarbonsäure; CAS 1076-97-7 99 %; Tokyo Chemical Industries, Japan, abgekürzt als CHDA.
Diphenylcarbonat: Diphenylcarbonat, 99,5 %, CAS 102-09-0; Acros Organics, Geel, Belgien, abgekürzt als DPC
2-Butyl-2-ethyl-1,3-propandiol, CAS: 115-84-4, ≥ 98,5 %, von Sigma Aldrich, abgekürzt als BEPD
4-Dimethylaminopyridin: 4-(Dimethylaminopyridin; ≥98,0 %; purum; CAS 1122-58-3; Sigma-Aldrich, München Deutschland, abgekürzt als DMAP
Isosorbid: Isosorbid (CAS: 652-67-5), 99,8 %, Polysorb PS A; Roquette Frères (62136 Lestrem, Frankreich); abgekürzt als ISB
Lithiumhydroxid-monohydrat (CAS: 1310-66-3); >99,0 %; Sigma-Aldrich
Lithiumhydroxid, CAS: 1310-65-2, > 98,0 von TCl
Tricyclodecandimethanol: (CAS: 26896-48-0) ; Isomerengemisch ; OQ Chemicals, 40789 Monheim, Deutschland, abgekürzt als TCD
Dimerfettsäure: Pripol 1009 (CAS : 68783-41-5); Mn ca. 570 g/mol; hydriert, Croda, 41334 Nettetal, Deutschland, abgekürzt als DFA
Natrium-(2-ethyl)hexanoat: (CAS: 19766-89-3); 97%; Sigma-Aldrich, München Deutschland
Tetrabutoxytitanate oder Titan(IV)butoxid: CAS: 5593-70-4, ≥ 97 %; abgekürzt TBT von Merck oder Sigma Aldrich
Dibutylzinndilaurat: CAS: 77-58-7, 95%, abgekürzt DBTL von Merck oder Sigma Aldrich
n-Butylzinnhydroxid-oxid: CAS: 2273-43-0 von Merck
Ethylacetat: CAS: 141-78-6, techn.; von Merck
Dibutylzinnoxid: CAS: 818-08-6, 80-90 %, von Galata Chemicals, abgekürzt als SUL-11C
Di-n-octylzinnoxid: CAS: 870-08-6, >98 % von Galata Chemicals, abgekürzt als Mark DOTO,
Monobutylzinnoxid: CAS: 2272-43-0, 75-100%, von Tib Chemicals, abgekürzt als MBTO oder Tib cat 256
Zinn(II)-2-Ethylhecanoat, CAS: 301-10-0, 92,5-100,0 %,von Sigma Aldrich, abgekürzt als Sn(oct)2

### Beispiel 1: Polyestercarbonat aus DFA, TCD und ISB

185,75 g (1,27 mol) Isosorbid, 29,18 g (0,15 mol) TCD, 37,46 g (0,07 mol) Dimerfettsäure und 0,02 g Tetrabutoxytitanat als Katalysator wurden in einem Kolben mit Destillationsaufsatz vorgelegt. Der Kolbeninhalt wurde unter einem Stickstoffstrom aufgeschmolzen und auf 220 °C erwärmt. Dabei wurde eine Wasserentwickelung beobachtet, wobei die Wassertropfen oben am Kolben und im Destillationsaufsatz kondensierten. Es konnte maximal 2,52 g (0,14 mol) Reaktionswasser gebildet werden. Nach 4.5 Stunden wurde eine SZ von 0,7 mg KOH/g gemessen. Das Material wurde auf 120°C gekühlt und für 15 Minuten wurde ein Vakuum von 50 mbar eingestellt. Dann wurden 290,3 g (1,36 mol) DPC, 0,27 g Dibutylzinndilaurat (500 ppm) und 0,47 g Lithiumhydroxid.Wasser (500 ppm auf Lithiumhydroxid) zugesetzt. Die Temperatur wurde erhöht und ab 195°C wurde eine Phenolbildung beobachtet. Nach dem für 1 h die Temperatur auf 195°C gehalten wurde, wurde sie langsam auf 240°C erhöht und dort für 1 h gehalten. Dann wurde der Druck vorsichtig bis 50 mbar gesenkt. Ebenso senkte sich die Rührgeschwindigkeit durch die Viskositätserhöhung. Nach 2,5 h erhielt man ein braunes viskoses Material mit einer Tg von 114°C.

### Beispiel 2: Herstellung einer Verbindung (A) aus DFA und ISB

1071,88 g (7,33 mol) Isosorbid, 456,37 g (0,80 mol) Dimerfettsäure und 0,15 g Tetrabutoxytitanat als Katalysator wurden in einem Kolben mit Destillationsaufsatz vorgelegt. Der Kolbeninhalt wurde unter einem Stickstoffstrom aufgeschmolzen und auf 250 °C erhitzt, wobei eine Wasserentwickelung beobachtet werden konnte. Nach 2 h wurde der Inhalt des Kolbens auf 120°C gekühlt und die SZ betrug 4.9 mg KOH/g. Das Material wurde wieder auf 210°C erhitzt und für 3 h unter Vakuum gehalten (50 mbar). Die SZ betrug 3.4 mg KOH/g. Das Material wurde aus dem Kolben entfernt. Bei Raumtemperatur wurde ein wachsartiges, leicht bräunliches Material erhalten. Für weitere Messungen wurde das Material geschmolzen wobei die SZ 2.1 mg KOH/g und die OHZ 459.1 mg KOH/g betrug.

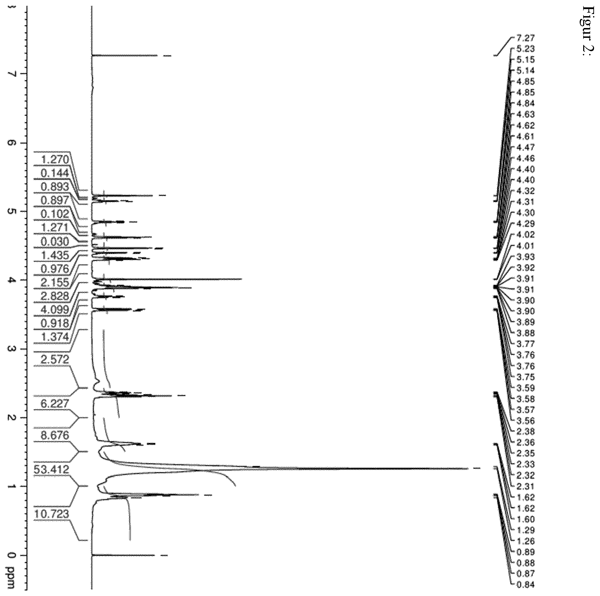

100 g des so erhaltenen Materials wurde in einem Kolben mit 100 mL Wasser und 100 mL Ethylacetat versetzt und unter Rühren auf 40 °C erhitzt. Nach Auflösung des Feststoffs wurde die Lösung auf Raumtemperatur abkühlen gelassen und der Rührer ausgeschaltet. Es bildeten sich langsam 2 Phasen. Sie wurden in einen Scheidetrichter überführt und über Nacht stehen gelassen. Dann wurde die Wasserphase abgetrennt und das Ethylacetat durch Destillieren unter Vakuum entfernt. Es blieb ein klares, leicht gelbliches, viskoses Material übrig. Die SZ war 3,7 mg KOH/g und die OHZ 120,4 mg KOH/g. Eine größere Menge ergab am Ende ein Material mit SZ 3,2 mg KOH/g und eine OHZ von 125,7 mg KOH/g. Figur 2 zeigt ein ¹H-NMR-Spektrum dieser Verbindung.

### Beispiel 3: Herstellung einer Verbindung (A) aus CHDA und ISB

1029,00 g (7,04 mol) Isosorbid, 466,29 g (2,71 mol) CHDA und 0,35 g n-Butylzinnhydroxid-oxid als Katalysator wurden in einem Kolben mit Destillationsaufsatz vorgelegt. Der Kolbeninhalt wurde unter einem Stickstoffstrom aufgeschmolzen und auf 250 °C erhitzt, wobei eine Wasserentwickelung beobachtet werden konnte. Nach einigen Stunden verringerte sich die Wasserentwicklung und eine SZ von 20,5 mg KOH/g und eine OHZ von 355.7 mg KOH/g wurde gemessen. Dann wurde der Inhalt des Kolbens auf 100°C gekühlt und 27,4 g Isosorbid dazu gegeben, um den Verlust zu kompensieren: gewünschte OH-Zahl 350 mg KOH/g. Das Material wurde auf 210°C erhitzt und für 2,5 h unter Vakuum gehalten ( 50 mbar). Die SZ war danach 9,4 mg KOH/g. Dann wurde die Reaktion noch 1,5 h bei 220°C unter Vakuum fortgesetzt. Es bildete sich ein braunes, pastenartiges Material. Die SZ betrug 3,4 mg KOH/g und die OHZ 346,7 mg KOH/g.

### Beispiel 4: Umsetzung des Verbindung des Beispiels 2 mit Isosorbid und DPC

10 g (0,0112 mol) der Verbindung (A) aus Beispiel 2 wurden zusammen mit 30 g (0,2053 mol) Isosorbid, 46,84 g (0,219 mol) Diphenylcarbonat sowie 300 µl einer Lösung von Natrium-2-ethylhexanoat (5 g auf 1 1 Methy-tert.-butylether) in einem Dreihalskolben mit Kurzwegabscheider vorgelegt. Das Gemisch wurde durch vierfaches Evakuieren und Inertisieren mit Stickstoff von Sauerstoff befreit und bei Normaldruck auf 160 °C unter Rühren aufgeschmolzen. Anschließend wurde die Temperatur in 10 Minutenabständen um 20 °C erhöht und die Rührgeschwindigkeit wurde erhöht. Ab ca. 220 °C entwickelte sich Phenol. Nach Erreichen von 235 °C wurde der Druck vorsichtig und stufenweise bis auf ca. 1 mbar reduziert. Bei 1 mbar wurde noch 10 Minuten bei niedriger Drehzahl nachgerührt. Danach wurde das Produkt entnommen. Das Produkt wies eine Lösungsviskosität von eta rel 1,34 auf.

### Beispiel 5: Herstellung einer Verbindung (A) aus DFA und TCD

321,5 g (1,64 mol) TCD, 136,9 g (0,24 mol) Dimerfettsäure und 0,05 g Tetrabutoxytitanat als Katalysator wurden in einem Kolben mit Destillationsaufsatz vorgelegt. Der Kolbeninhalt wurde unter einem Stickstoffstrom aufgeschmolzen und auf 250 °C erhitzt, wobei eine Wasserentwickelung beobachtet werden konnte. Nach 2 h wurde der Inhalt des Kolbens auf 120°C gekühlt. Das Material wurde wieder auf 200°C erhitzt und für 1 h unter Vakuum gehalten ( 50 mbar). Die SZ betrug 0,9 mg KOH/g.

### Beispiel 6: Umsetzung des Verbindung des Beispiels 2 mit Isosorbid, TCD und DPC

6,19 g (0,0075 mol) Verbindung (A) aus Beispiel 2 wurden zusammen mit 16,44g (0,1125 mol) Isosorbid, 2,94g (0,0150 mol) Tricyclodecandimethanol und 29,21 g (0,1364 mol) Diphenylcarbonat sowie 98,6 µl einer Lösung von 5 g/L Natrium-2-ethylhexanoat in MTBE (Methyl-tert.-butylether) in einem Dreihalskolben mit Kurzwegabscheider vorgelegt. Das Gemisch wurde durch vierfaches Evakuieren und Inertisieren mit Stickstoff von Sauerstoff befreit und bei Normaldruck auf 160 °C unter Rühren erwärmt. Unter starkem Rühren wurde das Reaktionsgemisch langsam auf 235 °C erwärmt. Ab 220 °C destillierte Phenol kontinuierlich ab. Anschließend wurde der Druck langsam auf <1 mbar abgesenkt und gleichzeitig die Temperatur schrittweise auf 255 °C erhöht. Bei einem Druck von <1 mbar wurde 10 min bei niedriger Rührerdrehzahl nachgerührt. Danach wurde das Produkt entnommen. Das Produkt wies eine Lösungsviskosität von eta rel 1,350 auf.

### Beispiel 7: Herstellung einer Verbindung (A) aus CHDA und ISB

3485,89 g (23,85 mol) Isosorbid, 1500,05 g (8,71 mol) CHDA und 0,45 g TBT als Katalysator wurden in einem Kolben mit Destillationsaufsatz vorgelegt. Der Kolbeninhalt wurde unter einem Stickstoffstrom aufgeschmolzen und auf 250 °C erhitzt, wobei eine Wasserentwickelung beobachtet werden konnte. Nach einigen Stunden verringerte sich die Wasserentwicklung und wurde das Gemisch auf 220 °C herunter gekühlt und and ein Vakuum angelegt für einige Stunden. Die Säurezahl betrug 4.8 mg KOH/g und die OH Zahl 365,7 mg KOH/g. Weil die OH Zahl zu hoch war für die vorgesehene von etwa 250 mg KOH/g wurden weitere 69 g des CHDA hinzugefügt und für eine Stunde mitreagieren gelassen. Das Material wurde dann weiterhin auf 220 °C unter Vakuum gehalten (50 mbar) bis die SZ unter 5 mg KOH/g war. Es bildete sich ein braunes, pastenartiges Material beim Ausgießen vom Reaktor. Die SZ betrug 3,7 mg KOH/g und die OHZ 349,7 mg KOH/g.

### Beispiel 8: Umsetzung des Verbindung des Beispiels 7 mit DPC

53,21 g Diphenylcarbonat und 71,73 der Verbindung (A) des Beispiels 7 (0,55 mol DPC im Verhältnis zu den OH-Gruppen der Verbindung (A) des Beispiels 7) wurden in einem alkalifreien Glaskolben gemeinsam mit dem in Tabelle 1 angegeben Katalysator geschmolzen.

**Tabelle 1:**

| **Katalysator** | **Menge in Bezug auf die Verbindung (A)** |
|---|---|
| DBTL | 500 ppm |
| SUL-11 | 500 ppm |
| Mark DOTO | 500 ppm |
| Sn(Oct)2 | 500 ppm |
| LiOH | 500 ppm |
| Tib cat 256 | 500 ppm |

Der Glaskolben wurde drei Mal mit Stickstoff gespült und danach einer Batch-Veresterung unter mechanischem Rühren unterzogen. Die Temperatur und das Vakuum wurden schrittweise gemäß dem folgenden Protokoll verändert:

| | |
|---|---|
| 1. Schritt(50 Minuten): | 170 °C, Atmosphärendruck |
| 2. Schritt (20 Minuten): | 180 °C, 200 mbara |
| 3. Schritt (40 minutes): | 215 °C, 100 mbara |
| 4. Schritt (20 Minuten): | 240 °C, 50 mbara |
| 5. Schritt (15 Minuten): | 240 °C, 25 mbara |
| 6. Schritt (20 Minuten): | 255 °C, 5 mbara |
| 7. Schritt (120 Minuten): | 255 °C <1 mbara |

Nach dem 7. Schritt wurde das Vakuum entfernt und das Polymer entnommen.

Die Ergebnisse unter Verwendung der unterschiedlichen Katalysatoren ist in Tabelle 2 gezeigt:

**Tabelle 2**

| Katalysator | Mw (g/mol) bestimmt über GPC-Methode II |
|---|---|
| DBTL | 18.515 |
| SUL-11 | 30.821 |
| Mark DOTO | 28.819 |
| Sn(Oct)2 | 9.236 |
| LiOH | 11.389 |
| Tib Cat 256 | 22.214 |

### Beispiel 9: Umsetzung des Verbindung des Beispiels 7 mit TCD oder BEPD und DPC

63,62 g Diphenylcarbonat, 7,17 g 2-Butyl-2-ethylpropan-1,3-diol (BEPD) oder 7,17 g TCD (siehe Tabelle 4) und 71,73 der Verbindung (A) des Beispiels 7 (0,55 mol DPC im Verhältnis zur Summe der OH-Gruppen der Verbindung (A) des Beispiels 7 und allen anderen OH-Gruppen) wurden in einem alkalifreien Glaskolben gemeinsam mit dem in Tabelle 3 angegeben Katalysator geschmolzen.

**Tabelle 3:**

| **Katalysator** | **Menge in Bezug auf die Verbindung (A)** |
|---|---|
| LiOH | 500 ppm |
| DBTL + LiOH | 500 ppm |
| DBTL + Tib cat 256 | 500 ppm |
| Tib cat 256 | 500 ppm |
| DBTL | 500 ppm |

Der Glaskolben wurde drei Mal mit Stickstoff gespült und danach einer Batch-Veresterung unter mechanischem Rühren unterzogen. Die Temperatur und das Vakuum wurden schrittweise gemäß dem folgenden Protokoll verändert:

| | |
|---|---|
| 1. Schritt(50 Minuten): | 170 °C, Atmosphärendruck |
| 2. Schritt (20 Minuten): | 180 °C, 200 mbara |
| 3. Schritt (40 minutes): | 215 °C, 100 mbara |
| 4. Schritt (15 Minuten): | 230 °C, 50 mbara |
| 5. Schritt (15 Minuten): | 240 °C, 50 mbara |
| 6. Schritt (30 Minuten): | 240 °C, 5 mbara |
| 7. Schritt (20 Minuten): | 250 °C, 5 mbara |
| 8. Schritt (75 Minuten): | 250 °C < 1 mbara |
| 9. Schritt (45 Minuten): | 280 °C < 1 mbara |

Nach dem 9. Schritt wurde das Vakuum entfernt und das Polymer entnommen.

Die Ergebnisse unter Verwendung der unterschiedlichen Katalysatoren ist in Tabelle 4 gezeigt:

**Tabelle 4:**

| Diol | Katalysator | Mw (g/mol) bestimmt über GPC-Methode II |
|---|---|---|
| BEPD | LiOH | 19.797 |
| BEPD | DBTL + LiOH | 23.953 |
| BEPD | DBTL + Tib cat 256 | 29.182 |
| BEPD | DBTL | 14.213 |
| BEPD | Tib cat 256 | 36.823 |
| TCD | DBTL | 26.526 |

### Beispiel 10: Umsetzung des Verbindung des Beispiels 2 mit DPC

2,00 g Diphenylcarbonat und 1,50 g der Verbindung (A) des Beispiels 2 (0,55 mol DPC im Verhältnis zu den OH-Gruppen der Verbindung (A) des Beispiels 2) wurden in einem alkalifreien Reagenzglas gemeinsam mit dem in Tabelle 5 angegeben Katalysator geschmolzen.

**Tabelle 5:**

| **Katalysator** | **Menge in Bezug auf die Verbindung (A)** |
|---|---|
| DBTL + LiOH | 500 ppm |
| DBTL + Tib cat 256 | 500 ppm |
| DBTL | 500 ppm |
| SUL-11 | 500 ppm |
| Mark DOTO | 500 ppm |

Der Glaskolben wurde drei Mal mit Stickstoff gespült und danach einer Batch-Veresterung unter mechanischem Rühren unterzogen. Die Temperatur und das Vakuum wurden schrittweise gemäß dem folgenden Protokoll verändert:

| | |
|---|---|
| 1. Schritt(60 Minuten): | 170 °C, Atmosphärendruck |
| 2. Schritt (15 Minuten): | 180 °C, 200 mbara |
| 3. Schritt (10 minutes): | 215 °C, 100 mbara |
| 4. Schritt (10 Minuten): | 240 °C, 50 mbara |
| 5. Schritt (10 Minuten): | 240 °C, 25 mbara |
| 6. Schritt (20 Minuten): | 255 °C, 5 mbara |
| 7. Schritt (40 Minuten): | 255 °C, < 1 mbara |

Nach dem 7. Schritt wurde das Vakuum entfernt und Methylenchlorid wurde zugegeben, um das Polymer aufzulösen. Die Mischung wurde in eine Aluminiumschale geben und getrocknet.

Die Ergebnisse unter Verwendung der unterschiedlichen Katalysatoren ist in Tabelle 6 gezeigt. Tabelle 6:

| Katalysator | Mw (g/mol) bestimmt über GPC-Methode II |
|---|---|
| DBTL + LiOH | 23.497 |
| DBTL + Tib cat 256 | 15.458 |
| DBTL | 16.682 |
| SUL-11 | 73.132 |
| Mark DOTO | 17.784 |

Wie man an Hand der Ergebnisse sehen kann, lassen sich Copolyestercarbonate effizient über das erfindungsgemäße Verfahren herstellen. Dabei weisen die Copolyestercarbonate eine ausgezeichnete Kohlenstoffbilanz auf.

## Patentansprüche

1. Verfahren zur Herstellung eines amorphen Polyestercarbonats mit einer Glasübergangstemperatur > 90 °C, umfassend die Schritte
(i) Veresterung eines 1,4:3,6-Dianhydrohexitols und / oder von Tricyclodecandimethanol mit mindestens einer Dicarbonsäure und/oder einem Anhydrid einer Dicarbonsäure, um eine Verbindung (A) zu erhalten, die mindestens zwei Estergruppen und eine Säurezahl von kleiner 10 mg KOH/g aufweist und
(ii) Reaktion der Verbindung (A) mit mindestens einem Diarylcarbonat und / oder Dialkylcarbonat, um das Polyestercarbonat zu erhalten.

2. Verfahren nach Anspruch 1, **dadurch gekennzeichnet, dass** in Verfahrensschritt (ii) zusätzlich mindestens ein Diol anwesend ist.

3. Verfahren nach Anspruch 2, **dadurch gekennzeichnet, dass** das mindestens eine zusätzliche Diol aliphatisch oder cycloaliphatisch ist.

4. Verfahren nach Anspruch 3, **dadurch gekennzeichnet, dass** das mindestens eine zusätzliche Diol ausgewählt ist aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, 2,2-bis(4-Hydroxycyclohexyl)propan, Tetrahydro-2,5-furandimethanol, 2,2,4,4-Tetramethyl-1,3-cyclobutandiol, Cyclobutan-1,1-diyldimethanol, und 8-(Hydroxymethyl)-3-tricyclo[5.2.1.02,6]decanyl]methanol, 2-Butyl-2-ethyl-1,3-propandiol, 2-(2-Hydroxyethoxy)ethanol, 2,2,4-Trimethyl-1,3-pentandiol, 2,2-Dimethylpropan-1,3-diol, 1,2-Propandiol, 1,3-Propandiol, 1,4-Butandiol, 1,5-Pentandiol, 1,6-Hexandiol, 1,8-Octandiol, 1,4:3,6-Dianhydrohexitol und einer Verbindung der Formel (4),
HO-(CH₂)ᵣ-R³-(CH₂)ₛ-OH (4),
wobei jedes r und jedes s unabhängig voneinander für eine Zahl zwischen 0 und 4 steht und jedes R³ unabhängig voneinander für eine Struktur der Formeln (R3A), (R3B), (R3C) und (R3D) steht 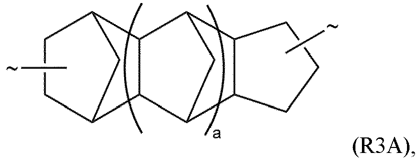
wobei a 0 oder 1 ist, 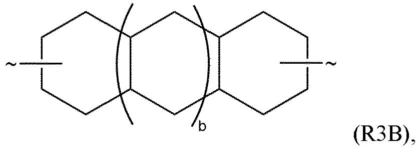
wobei b 0 oder 1 ist, 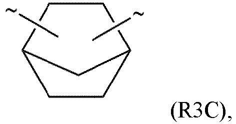 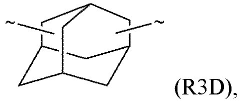
wobei die mit "~" gekennzeichneten Positionen in den Formeln (R3A) bis (R3D) die Positionen sind, an denen sich die in Formel (4) gezeigte (CH₂)ᵣ-Gruppe beziehungsweise (CH₂)ₛ-Gruppe befindet.

5. Verfahren nach Anspruch 4, **dadurch gekennzeichnet, dass** das mindestens eine zusätzliche Diol ausgewählt ist aus der Gruppe, bestehend aus 1,4:3,6-Dianhydrohexitol und einer Verbindung der Formel (4), wobei in Formel (4) jedes r und jedes s unabhängig voneinander für eine Zahl zwischen 0 und 2, ganz besonders bevorzugt für 0 oder 1, jedes R³ unabhängig voneinander für eine Struktur der Formeln (R3A) steht und a 0 oder 1 ist.

6. Verfahren nach einem der Ansprüche 1 bis 6, **dadurch gekennzeichnet, dass** die Dicarbonsäure ausgewählt wird aus der Gruppe, bestehend aus den durch Formel (1), (2) und (3) dargestellten Verbindungen, Sebazinsäure, Furandicarbonsäure, Napthalindicarbonsäure, Phthalsäure, Isophthalsäure und Terephthalsäure oder den entsprechenden Anhydriden der genannten Säuren, 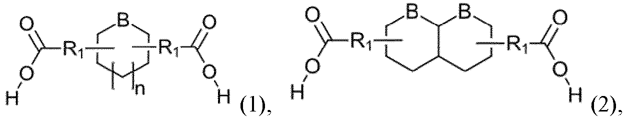
worin in den Formeln (1) und (2)
B jeweils unabhängig voneinander für eine CH₂-Gruppe oder ein Heteroatom, welches ausgewählt ist aus der Gruppe, bestehend aus O und S, bevorzugt eine CH₂-Gruppe oder ein Sauerstoffatom, steht,
R₁ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht und
n eine Zahl zwischen 0 und 3, bevorzugt 0 oder 1 ist, und 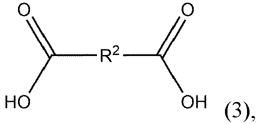
worin in der Formel (3) jedes R² unabhängig voneinander für eine aliphatische Gruppe mit 16 bis 44 Kohlenstoffatomen steht, welche gegebenenfalls ein oder mehrere Doppelbindungen enthält.

7. Verfahren nach einem der Ansprüche 1 bis 6, **dadurch gekennzeichnet, dass** die Dicarbonsäure aliphatisch ist.

8. Verfahren nach einem der Ansprüche 6 oder 7, **dadurch gekennzeichnet, dass** R² in der Formel (3) dargestellt wird durch die folgende Formel (R2A) mit 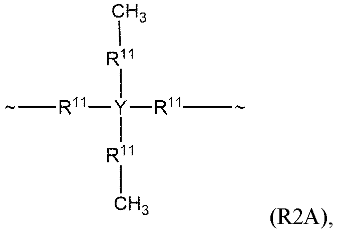
wobei Y für eine verbrückende Struktur steht, die ausgewählt wird aus der Gruppe, bestehend aus einer Alkylen-Gruppe mit 1 bis 4 Kohlenstoffatomen, einer Alkyliden-Gruppe mit 1 bis 4 Kohlenstoffatomen und einer Cycloalkylen-Gruppe mit 4 bis 12 Kohlenstoffatomen, wobei die Cycloalkylen-Gruppe gegebenenfalls eine oder mehrere Doppelbindungen enthält und/oder gegebenenfalls an eine oder mehrere weitere Cycloalkylen-Gruppen kondensiert ist, wobei die eine oder mehreren weiteren Cycloalkylengruppen gegebenenfalls jeweils eine oder mehrere Doppelbindungen aufweisen,
wobei die an die verbrückende Struktur angrenzenden R¹¹-Gruppen an eine beliebige Position der verbrückenden Struktur gebunden sind und
wobei jedes R¹¹ unabhängig voneinander für eine Alkylen-Gruppe mit 1 bis 12 Kohlenstoffatomen oder eine Alkyliden-Gruppe mit 1 bis 12 Kohlenstoffatomen steht, mit der Maßgabe dass die Struktur der Formel (R2A) 16 bis 44 Kohlenstoffatome umfasst und wobei die mit "~" gekennzeichneten Positionen in der Formel (R2A) die Positionen sind, an denen sich jeweils die in Formel (3) gezeigten (C=O)-Gruppen befinden, welche an R² angrenzen.

9. Verfahren nach Anspruch 8, **dadurch gekennzeichnet, dass** die Formel (R2A) dargestellt wird durch eine der Formeln (R2Aa), (R2Ab), (R2Ac) oder (R2Ad), mit 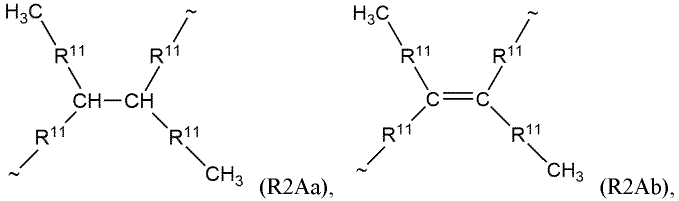 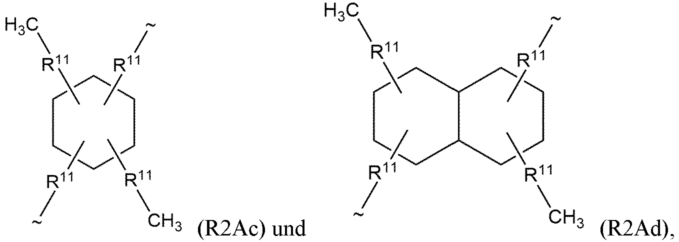 wobei jedes R¹¹ und jedes "~" die in Anspruch 8 genannten Bedeutungen hat, der Zyklus der Formel (R2Ac) gegebenenfalls eine oder zwei Doppelbindungen aufweist und jeder Zyklus der Formel (R2Ad) unabhängig voneinander gegebenenfalls eine oder zwei Doppelbindungen enthält.

10. Verbindung der Formel (5) 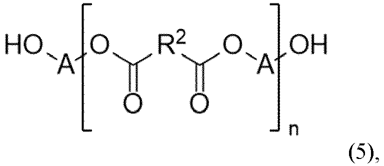
wobei in der Formel (5) jedes A jeweils unabhängig voneinander für die Formel (5a) oder (5b) steht, 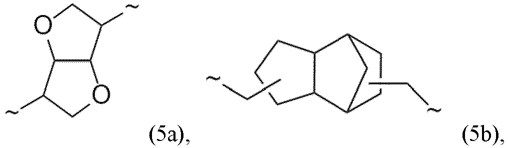
wobei die wobei die mit "~" gekennzeichneten Positionen in der Formeln (5a) und (5b) die Positionen sind, an denen sich jeweils die in Formel (5) gezeigten Sauerstoffatome befinden, welche an A angrenzen,
jedes R² unabhängig voneinander für eine aliphatische Gruppe mit 16 bis 44 Kohlenstoffatomen steht, welche gegebenenfalls ein oder mehrere Doppelbindungen enthält und
n für eine Zahl von 1 bis 10 steht.

11. Polyestercarbonat, umfassend die Struktureinheit der der Formel (6) 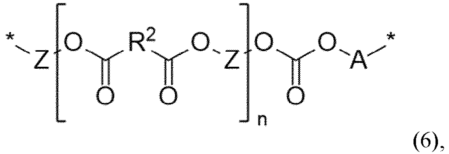
wobei in der Formel (6)
Z entweder immer für die Formel (5a) oder immer für die Formel (5b) steht, jedes A jeweils unabhängig voneinander für die Formel (5a) oder (5b) steht, 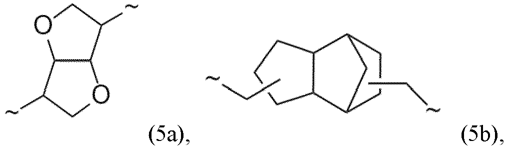
wobei die wobei die mit "~" gekennzeichneten Positionen in der Formeln (5a) und (5b) die Positionen sind, an denen sich jeweils die in Formel (6) gezeigten Sauerstoffatome befinden, welche an A oder Z angrenzen,
die mit "*" gekennzeichneten Positionen in der Formel (6) die Positionen sind, mit denen die Formel (6) in das Polyestercarbonat eingebunden ist,
jedes R² unabhängig voneinander für eine aliphatische Gruppe mit 16 bis 44 Kohlenstoffatomen steht, welche gegebenenfalls ein oder mehrere Doppelbindungen enthält und
n für eine Zahl von 2 bis 10 steht.

12. Verbindung nach Anspruch 10 oder Polyestercarbonat nach Anspruch 11, **dadurch gekennzeichnet, dass**
R² in der Formel (5) oder der Formel (6) dargestellt wird durch die folgende Formel (R2A) 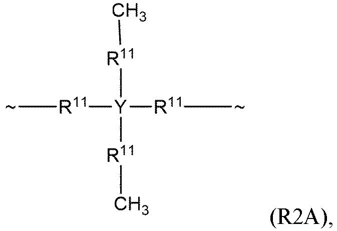
wobei Y für eine verbrückende Struktur steht, die ausgewählt wird aus der Gruppe, bestehend aus einer Alkylen-Gruppe mit 1 bis 4 Kohlenstoffatomen, einer Alkyliden-Gruppe mit 1 bis 4 Kohlenstoffatomen und einer Cycloalkylen-Gruppe mit 4 bis 12 Kohlenstoffatomen, wobei die Cycloalkylen-Gruppe gegebenenfalls eine oder mehrere Doppelbindungen enthält und/oder gegebenenfalls an eine oder mehrere weitere Cycloalkylen-Gruppen kondensiert ist, wobei die eine oder mehreren weiteren Cycloalkylengruppen gegebenenfalls jeweils eine oder mehrere Doppelbindungen aufweisen,
wobei die an die verbrückende Struktur angrenzenden R¹¹-Gruppen an eine beliebige Position der verbrückenden Struktur gebunden sind und
wobei jedes R¹¹ unabhängig voneinander für eine Alkylen-Gruppe mit 1 bis 12 Kohlenstoffatomen oder eine Alkyliden-Gruppe mit 1 bis 12 Kohlenstoffatomen steht, mit der Maßgabe dass die Struktur der Formel (R2A) 16 bis 44 Kohlenstoffatome umfasst und wobei die mit "~" gekennzeichneten Positionen in der Formel (R2A) die Positionen sind, an denen sich jeweils die in Formel (5) oder (6) gezeigten (C=O)-Gruppen befinden, welche an R² angrenzen.

13. Verbindung nach Anspruch 12 oder Polyestercarbonat nach Anspruch 12, **dadurch gekennzeichnet, dass** die Formel (R2A) dargestellt wird durch eine der Formeln (R2Aa), (R2Ab), (R2Ac) oder (R2Ad), mit 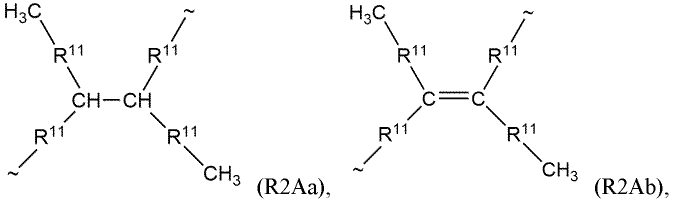 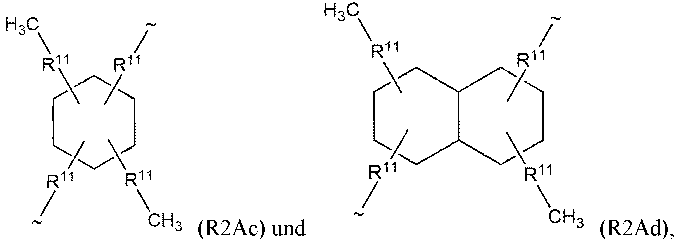 wobei jedes R¹¹ und jedes "~" die in Anspruch 11 genannten Bedeutungen hat, der Zyklus der Formel (R2Ac) gegebenenfalls eine oder zwei Doppelbindungen aufweist und jeder Zyklus der Formel (R2Ad) unabhängig voneinander gegebenenfalls eine oder zwei Doppelbindungen enthält.

14. Formmasse, enthaltend das Polyestercarbonat nach Anspruch 11.

15. Formkörper, enthaltend das Polyestercarbonat nach Anspruch 11.
